# EUROPEAN PATENT APPLICATION

(11) **EP 4 407 005 A1**
(43) Date of publication of application: **31.07.2024**
(21) Application number: 22872937.2
(22) Date of filing: 21.09.2022
(51) Int. Cl.: C08L 101/10, C08K 5/057, C08K 5/09, C08K 5/17, C08L 23/00, C08L 33/06, C08L 71/02

(54) **CURABLE COMPOSITION**

(30) Priority: 24.09.2021 JP 2021155804; 21.01.2022 JP 2022008237
(71) Applicant: Kaneka Corporation, Osaka-shi, Osaka 530-8288 (JP)
(72) Inventor: VANDEBRIL, Steven, 2260 Westerlo-Oevel (BE); VAN SANDE, Guido, 2260 Westerlo-Oevel (BE); YOSHIDA, Hayato, Takasago-shi, Hyogo 676-8688 (JP); KUBOTA, Nodoka, Takasago-shi, Hyogo 676-8688 (JP); WAKABAYASHI, Katsuyu, Takasago-shi, Hyogo 676-8688 (JP); ZHANG, Dong, Takasago-shi, Hyogo 676-8688 (JP)
(74) Representative: Vossius & Partner Patentanwälte Rechtsanwälte mbB
(86) International application number: PCT/JP2022/035183
(87) International publication number: WO 2023/048186

(57) **Abstract**

A curable composition contains an organic polymer (A) containing a reactive silicon group and a curing catalyst (B) containing the following components (b1), (b2), and (b3): (b1) an organic carboxylic acid; (b2) an organic amine compound; and (b3) a metal compound represented by the following formula: M(OR²)_{d}Y_{e-d}, wherein M is a metal atom having a valence e and selected from titanium metal, aluminum metal, zirconium metal, and hafnium metal, e is the valence of the central metal, R² is a substituted or unsubstituted hydrocarbon group having 1 to 20 carbon atoms, Y is a chelate coordination compound, and d is 0 or an integer from 1 to e.

## Description

### Technical Field

The present invention relates to a curable composition containing an organic polymer having a silicon group that has a hydroxy or hydrolyzable group bonded to a silicon atom and that is capable of forming a siloxane bond to form a crosslink (this silicon group may be hereinafter referred to as a "reactive silicon group").

### Background Art

An organic polymer having at least one reactive silicon group in the molecule is known to undergo crosslinking to give a rubber-like cured product even at room temperature. The crosslinking results from siloxane bond formation associated with processes such as a hydrolysis reaction of silyl groups which occurs due to moisture or any other cause.

Such reactive silicon group-containing organic polymers include organic polymers whose main chain structure is a polyoxyalkylene, a polyacrylic ester, or polyisobutylene. These organic polymers have been already produced industrially and become widely used in various products such as sealing materials, adhesives, paints, and waterproof materials (see Patent Literatures 1, 2, 3, 4, and 5, for example).

A reactive silicon group-containing organic polymer may be used in a curable composition for a sealing material, an adhesive, a paint, a waterproof material, or the like. Such a composition is required to have various properties such as high curability, high adhesion, and high workability, and a cured product of the composition is required to have good mechanical properties, high waterproof performance, and other suitable properties.

A curable composition containing a reactive silicon group-containing organic polymer is usually cured by means of a silanol condensation catalyst such as an organotin compound which has a carbon-tin bond and a typical example of which is dibutyltin bis(acetylacetonate). Such silanol condensation catalysts are also referred to as "curing catalysts". Organotin compounds have recently been considered problematic due to their toxicity, and their use requires attention in terms of environmental safety.

Against this background, the use of curing catalysts other than organotin compounds has been proposed, and examples of the other curing catalysts include tin salts of carboxylic acids, other metal salts of carboxylic acids, organic salts combining a carboxylic acid and an amine compound, and metal complexes such as titanium compounds (see Patent Literatures 3, 4, 6, and 7).

However, many of these catalysts are inferior to organotin catalysts in terms of curability.

The performance properties required of a cured product obtained by a reaction of a curable composition widely vary depending on the intended application of the cured product. Known examples of methods of using a curable composition made with a reactive silicon group-containing organic polymer to produce a waterproof material include a method in which a waterproof sheet is bonded by means of the curable composition and a method in which the curable composition itself is used as a waterproof coating (see Patent Literature 8).

### Citation List

### Patent Literature

PTL 1: Japanese Laid-Open Patent Application Publication No. S52-73998
PTL 2: Japanese Laid-Open Patent Application Publication No. S63-6041
PTL 3: Japanese Laid-Open Patent Application Publication No. S55-9669
PTL 4: Japanese Laid-Open Patent Application Publication No. 2003-206410
PTL 5: Japanese Laid-Open Patent Application Publication No. 2018-162394
PTL 6: Japanese Laid-Open Patent Application Publication No. H5-117519
PTL 7: WO 2005/108499
PTL 8: WO 2012/070666

### Summary of Invention

### Technical Problem

However, the conventional techniques mentioned above leave room for improvement in terms of ensuring both curability and waterproof performance (low water absorption rate).

It is therefore an object of the present invention to provide a curable composition containing a reactive silicon group-containing organic polymer, the curable composition having high curability (ability to rapidly cure) and being formable into a cured product that exhibits a low water absorption rate, despite the use of a non-organotin curing catalyst in the curable composition.

### Solution to Problem

As a result of intensive studies with the goal of solving the above problem, the present inventors have found that the use of a reactive silicon group-containing organic polymer and a particular curing catalyst allows for obtaining a curable composition having high curability (ability to rapidly cure) and formable into a cured product that exhibits a low water absorption rate. Based on this finding, the inventors have completed the present invention.

Specifically, the present invention relates to a curable composition containing:
an organic polymer (A) containing a reactive silicon group represented by the following formula (1):
   -SiR¹₃₋ₐXₐ (1), wherein R¹ is a substituted or unsubstituted hydrocarbon group having 1 to 20 carbon atoms or a triorganosiloxy group represented by R⁰₃SiO- wherein the three R⁰ groups are each a hydrocarbon group having 1 to 20 carbon atoms and may be the same or different, X is a hydroxy group or a hydrolyzable group, a is 1, 2, or 3, and when there are a plurality of R¹ or X groups, the R¹ or X groups may be the same or different; and
a curing catalyst (B) containing the following components (b1), (b2), and (b3):
   (b1) an organic carboxylic acid;
   (b2) an organic amine compound; and
   (b3) a metal compound represented by the following formula (2):
      M(OR²)_{d}Y_{e-d} (2), wherein M is a metal atom having a valence e and selected from titanium metal, aluminum metal, zirconium metal, and hafnium metal, e is the valence of the central metal, R² is a substituted or unsubstituted hydrocarbon group having 1 to 20 carbon atoms, Y is a chelate coordination compound, and d is 0 or an integer from 1 to e.

### Advantageous Effects of Invention

A curable composition of the present invention has high curability (ability to rapidly cure) and is formable into a cured product that exhibits low water absorbency (low water absorption rate) and therefore excellent waterproof performance.

Additionally, the curable composition of the present invention can offer the advantage of exhibiting strength quickly when cured.

### Description of Embodiments

Hereinafter, the present invention will be described in detail.

### (Reactive Silicon Group-Containing Organic Polymer (A))

A reactive silicon group-containing organic polymer (A) according to the present disclosure has a polymer backbone (also referred to as "main chain structure") and polymer chain ends bonded to the polymer backbone. The polymer backbone is a structure made up of a series of monomer units derived from monomers bonded to one another through polymerization or condensation. The monomers bonded to one another may be of the same type or include different types of monomers.

The polymer chain ends are sites located at the ends of the reactive silicon group-containing organic polymer (A). The number of the polymer chain ends of the reactive silicon group-containing organic polymer (A) is two when the whole polymer backbone is linear and three or more when the whole polymer backbone is branched. When the polymer backbone is a mixture of a linear backbone and a branched backbone, the number of the polymer chain ends can be between two and three on average.

The reactive silicon group can be located in the polymer backbone or at the polymer chain ends. Two or more reactive silicon groups may be located at one polymer chain end. In the case where a curable composition according to the present disclosure is used in an adhesive, a sealing material, an elastic coating agent, a pressure-sensitive adhesive or the like, the reactive silicon group of the reactive silicon group-containing organic polymer (A) is preferably located at the polymer chain ends.

The reactive silicon group-containing organic polymer (A) is not limited to a particular structure and may be any organic polymer having a reactive silicon group represented by the following formula (1).

-SiR¹₃₋ₐXₐ (1)

In the formula, R¹ is a substituted or unsubstituted hydrocarbon group having 1 to 20 carbon atoms or a triorganosiloxy group represented by R⁰₃SiO- wherein the three R⁰ groups are each a hydrocarbon group having 1 to 20 carbon atoms and may be the same or different, X is a hydroxy group or a hydrolyzable group, a is 1, 2, or 3, and when there are a plurality of R¹ or X groups, the R¹ or X groups may be the same or different.

Examples of R¹ in the formula (1) include: alkyl groups such as methyl and ethyl groups; alkyl groups having a heteroatom-containing group, such as chloromethyl, methoxymethyl, and 3,3,3-trifluoropropyl groups; cycloalkyl groups such as a cyclohexyl group; aryl groups such as a phenyl group; aralkyl groups such as a benzyl group; and triorganosiloxy groups represented by R⁰₃SiO- wherein R⁰ is a methyl or phenyl group. Alkyl groups or alkyl groups having a heteroatom-containing group are preferred. Among these, a methyl group is industrially advantageous. In terms of curability, methoxymethyl and chloromethyl groups are preferred. When there are a plurality of R¹ groups, the R¹ groups may be the same or different.

X in the formula (1) is a hydroxy group or a hydrolyzable group. The hydrolyzable group is not limited to a particular type, and may be any known hydrolyzable group. Examples of the hydrolyzable group include a hydrogen atom, halogen atoms, and alkoxy, acyloxy, ketoximate, amino, amide, acid amide, aminooxy, mercapto, and alkenyloxy groups. Among these, alkoxy, acyloxy, ketoximate, and alkenyloxy groups are preferred. Alkoxy groups such as methoxy and ethoxy groups are more preferred in terms of moderate hydrolyzability and ease of handling.

The integer a is 1, 2, or 3. The integer a is preferably 2 or 3. In terms of further improvement in curability, a is particularly preferably 3.

Examples of the reactive silicon group represented by the formula (1) include, but are not limited to, dimethoxymethylsilyl, diethoxymethylsilyl, trimethoxysilyl, triethoxysilyl, dimethoxyphenylsilyl, methoxymethyldimethoxysilyl, methoxymethyldiethoxysilyl, triisopropenyloxysilyl, and triacetoxysilyl groups. Among these, dimethoxymethylsilyl and trimethoxysilyl groups are preferred in terms of easy synthesis. Trimethoxysilyl and methoxymethyldimethoxysilyl groups are preferred in terms of achieving high curability. Trimethoxysilyl and triethoxysilyl groups are preferred in terms of obtaining a cured product that exhibits a high recovery rate or a low water absorption rate.

### (Main Chain Structure of Reactive Silicon Group-Containing Organic Polymer (A))

The reactive silicon group-containing organic polymer (A) is not limited to having a particular main chain structure (also referred to as "polymer backbone") and may have any of various main chain structures. Specific examples of the main chain structure include: polyoxyalkylene polymers such as polyoxyethylene, polyoxypropylene, polyoxybutylene, polyoxytetramethylene, polyoxyethylene-polyoxypropylene copolymer, and polyoxypropylene-polyoxybutylene copolymer; hydrocarbon polymers such as ethylene-propylene copolymer, polyisobutylene, copolymer of isobutylene and isoprene, polychloroprene, polyisoprene, copolymer of isoprene or butadiene with acrylonitrile and/or styrene, polybutadiene, copolymer of isoprene or butadiene with acrylonitrile and styrene, and hydrogenated polyolefin polymers obtained by hydrogenation of the mentioned polyolefin polymers; polyester polymers obtained by condensation of a dibasic acid such as adipic acid and glycol or ring-opening polymerization of a lactone; (meth)acrylic ester polymers obtained by radical polymerization of a (meth)acrylic ester monomer such as methyl (meth)acrylate, ethyl (meth)acrylate, butyl (meth)acrylate, 2-ethylhexyl (meth)acrylate, or stearyl (meth)acrylate; vinyl copolymers obtained by radical polymerization of a monomer such as a (meth)acrylic ester monomer, vinyl acetate, acrylonitrile, or styrene; graft polymers obtained by polymerization of a monomer such as a (meth)acrylic ester monomer, vinyl acetate, acrylonitrile, or styrene in any of the mentioned organic polymers; polysulfide polymers; polyamide polymers such as nylon 6 obtained by ring-opening polymerization of ε-caprolactam, nylon 6•6 obtained by polycondensation of hexamethylenediamine and adipic acid, nylon 6•10 obtained by polycondensation of hexamethylenediamine and sebacic acid, nylon 11 obtained by polycondensation of ε-aminoundecanoic acid, nylon 12 obtained by ring-opening polymerization of ε-aminolaurolactam, and a nylon copolymer containing two or more of the mentioned nylons as components; polycarbonate polymers obtained by polycondensation of bisphenol A and carbonyl chloride; and diallyl phthalate polymers. As for the terms as used above, for example, the term "(meth)acrylic ester" means "acrylic ester and/or methacrylic ester".

Among the mentioned polymers, saturated hydrocarbon polymers such as polyisobutylene, hydrogenated polyisoprene, and hydrogenated polybutadiene, polyoxyalkylene polymers, and (meth)acrylic ester polymers are more preferred since they have a relatively low glass transition temperature and their use can result in a cured product having high cold resistance. The glass transition temperature of the reactive silicon group-containing organic polymer (A) is not limited to a particular range, but is preferably 20°C or lower, more preferably 0°C or lower, and particularly preferably -20°C or lower. If the glass transition temperature is above 20°C, the polymer (A) could have an increased viscosity and reduced workability in winter or cold climates, or the resulting cured product could suffer from low flexibility and low elongation. The glass transition temperature is one measured by DSC.

Polyoxyalkylene polymers and (meth)acrylic ester polymers are particularly preferred since they have high moisture permeability and their use allows the composition prepared as a one-part composition to exhibit high depth curability and high adhesion. Polyoxyalkylene polymers are more preferred and polyoxypropylene is even more preferred.

(Meth)acrylic ester polymers are advantageous since their monomer composition can be changed in various combinations to improve adhesion, heat resistance, or weathering resistance or further reduce the water absorbency of the cured product obtained by curing the curable composition according to the present disclosure. The (meth)acrylic ester polymer used may be a homopolymer or a copolymer.

A polyoxyalkylene polymer is a polymer having a repeating unit represented by -R³-O- wherein R³ is a linear or branched alkylene group having 1 to 14 carbon atoms, and R³ is more preferably a linear or branched alkylene group having 2 to 4 carbon atoms. Specific examples of the repeating unit represented by -R³-O- include -CH₂O-, -CH₂CH₂O-, -CH₂CH(CH₃)O-, -CH₂CH(C₂H₅)O-, -CH₂C(CH₃)(CH₃)O-, and -CH₂CH₂CH₂CH₂O-. The main chain structure of the polyoxyalkylene polymer may be made up of only one type of repeating units or two or more types of repeating units. In particular, when used in a sealant, an adhesive, or the like, the polyoxypropylene polymer is preferably one in which oxypropylene repeating units account for 50 wt% or more, preferably 80 wt% or more, of the polymer main chain structure, since such a polyoxypropylene polymer is amorphous and has a relatively low viscosity.

The main chain structure of the polyoxyalkylene polymer may be linear or branched. When the main chain structure is branched, the number of branches is preferably from 1 to 6 (this means that the number of terminal hydroxy groups is from 3 to 8), more preferably from 1 to 4 (this means that the number of terminal hydroxy groups is from 3 to 6), and most preferably 1 (this means that the number of terminal hydroxy groups is 3). Having a branched main chain structure, the polyoxyalkylene polymer offers the advantage of improving the recovery performance of the cured product. Another expected advantage is that the water absorbency of the cured product can be reduced. When the main chain structure is branched and the integer a in the formula (1) representing the reactive silicon group is 3 (especially when the reactive silicon group is a trimethoxysilyl group), a cured product that exhibits a particularly low water absorption rate can be obtained.

The polyoxyalkylene polymer is preferably one obtained by subjecting a cyclic ether compound to a ring-opening polymerization reaction using a polymerization catalyst in the presence of an initiator.

Examples of the cyclic ether compound include ethylene oxide, propylene oxide, butylene oxide, tetramethylene oxide, and tetrahydrofuran. One of these cyclic ether compounds may be used alone, or two or more thereof may be used in combination. Among these cyclic ether compounds, propylene oxide is particularly preferred since with the use of propylene oxide, a polyether polymer can be obtained that is amorphous and has a relatively low viscosity.

Specific examples of the initiator include: alcohols such as butanol, ethylene glycol, propylene glycol, propylene glycol monoalkyl ether, butanediol, hexamethylene glycol, neopentyl glycol, diethylene glycol, dipropylene glycol, triethylene glycol, glycerin, trimethylolmethane, trimethylolpropane, pentaerythritol, and sorbitol; and polyoxyalkylene polymers such as polyoxypropylene diol, polyoxypropylene triol, polyoxyethylene diol, and polyoxyethylene triol which have a number-average molecular weight of 300 to 4,000.

Examples of methods for polyoxyalkylene polymer synthesis include, but are not limited to: a polymerization method using an alkali catalyst such as KOH; a polymerization method described in Japanese Laid-Open Patent Application Publication No. S61-215623, which uses a transition metal compound-porphyrin complex catalyst such as a complex obtained by a reaction of an organic aluminum compound and porphyrin; a polymerization method described in Japanese Examined Patent Application Publication No. S46-27250, Japanese Examined Patent Application Publication No. S59-15336, U.S. Patent No. 3278457, U.S. Patent No. 3278458, U.S. Patent No. 3278459, U.S. Patent No. 3427256, U.S. Patent No. 3427334, or U.S. Patent No. 3427335, which uses a double metal cyanide complex catalyst; a polymerization method described in Japanese Laid-Open Patent Application Publication No. H10-273512, which uses a catalyst made of a polyphosphazene salt; and a polymerization method described in Japanese Laid-Open Patent Application Publication No. H11-060722, which uses a catalyst made of a phosphazene compound. In terms of production cost and in order to obtain a polymer having a narrow molecular weight distribution, the polymerization method using a double metal cyanide complex catalyst is more preferred.

The main chain structure of the reactive silicon group-containing organic polymer (A) may be a polyoxyalkylene polymer whose main chain structure contains other bonds such as urethane bonds or urea bonds to the extent that the effect of the invention is not significantly diminished. Specific examples of such a polymer include polyurethane prepolymer.

The polyurethane prepolymer can be obtained by a known method, an example of which is a reaction of a polyol compound and a polyisocyanate compound.

Specific examples of the polyol compound include polyether polyol, polyester polyol, polycarbonate polyol, and polyether polyester polyol.

Specific examples of the polyisocyanate compound include diphenylmethane diisocyanate, tolylene diisocyanate, xylylene diisocyanate, methylene-bis(cyclohexyl isocyanate), isophorone diisocyanate, and hexamethylene diisocyanate.

The polyurethane prepolymer may be terminated either by hydroxy groups or isocyanate groups.

In the case where a cured product is obtained from a curable composition containing the reactive silicon group-containing organic polymer (A) whose main chain structure includes a polymer having urethane bonds, urea bonds, and/or ester bonds, the main chain could be cleaved at the urethane bonds, urea bonds, and/or ester bonds by heat or any other cause, and the cleavage could lead to reduced strength of the cured product.

The presence of amide bonds (-NR⁴-C(=O)-, wherein R⁴ is a hydrogen atom or a substituted or unsubstituted organic group) in the main chain structure of the reactive silicon group-containing organic polymer (A) can sometimes provide a curability enhancing effect. The more amide bonds the polymer contains, the higher the viscosity of the polymer tends to be. The presence of amide bonds could cause a viscosity increase of the polymer after storage, leading to reduced workability of a composition obtained using the polymer. Moreover, the amide bonds could be cleaved by heat or any other cause.

Thus, in the case where the main chain structure contains amide bonds, the average number of amide bonds per molecule is from 1 to 10, preferably from 1.5 to 5, and more preferably from 2 to 3. When the average number of amide bonds per molecule is 1 or more, a curability enhancing effect can sometimes be obtained. When the average number of amide bonds per molecule is 10 or less, the polymer tends to have a low viscosity and be easy to handle.

As seen from the foregoing description, a polyoxyalkylene polymer whose main chain structure does not contain urethane bonds, urea bonds, ester bonds, or amide bonds is most preferred as the main chain structure of the reactive silicon group-containing organic polymer (A) in order to obtain a curable composition having high storage stability and high workability.

It is preferable to obtain the reactive silicon group-containing organic polymer (A) by introducing reactive silicon groups into a polymer using any of the following methods (a) to (d):
(a) a method in which terminal hydroxy groups of a hydroxy-terminated organic polymer are converted to unsaturated carbon-carbon bond groups and then the unsaturated carbon-carbon bond groups are reacted with HSiR¹₃₋ₐXₐ (R¹, X, and a are as defined in the formula (1));
(b) a method in which terminal hydroxy groups of a hydroxy-terminated organic polymer are reacted with an isocyanatoalkylsilane compound represented by OCN-W-SiR¹₃₋ₐXₐ (W is a divalent organic group, and R¹, X, and a are as defined in the formula (1));
(c) a method in which terminal hydroxy groups of a hydroxy-terminated organic polymer are converted to unsaturated carbon-carbon groups and then the unsaturated carbon-carbon bond groups are reacted with a mercaptoalkylsilane compound represented by HS-W-SiR¹₃₋ₐXₐ (W is a divalent organic group, and R¹, X, and a are as defined in the formula (1)); and
(d) a method in which a hydroxy-terminated organic polymer is reacted with a polyisocyanate compound to synthesize an NCO-terminated organic polymer and then the NCO-terminated organic polymer is reacted with a silane compound represented by HNR⁵-W-SiR¹₃₋ₐXₐ (W is a divalent organic group, R⁵ is hydrogen or an alkyl group, and R¹, X, and a are as defined in the formula (1)) or HS-W-SiR¹₃₋ₐXₐ (W is a divalent organic group, and R¹, X, and a are as defined in the formula (1)).

Examples of the terminal unsaturated carbon-carbon bond groups in the methods (a) and (c) include vinyl, allyl, methallyl, allenyl, and propargyl groups.

When obtained by any of the above methods using a silane compound represented by any of the above formulae wherein W is methylene, the polymer (A) exhibits very high curability.

The method (a) is preferred because it tends to give the polymer (A) having good storage stability. The methods (b), (c), and (d) are preferred because they can achieve a high conversion percentage in a relatively short reaction time.

Examples of reactive silicon group introduction by the method (a) include: reactive silicon group introduction proposed in publications such as Japanese Examined Patent Application Publication No. S45-36319, Japanese Examined Patent Application Publication No. S46-12154, Japanese Laid-Open Patent Application Publication No. S50-156599, Japanese Laid-Open Patent Application Publication No. S54-6096, Japanese Laid-Open Patent Application Publication No. S55-13767, Japanese Laid-Open Patent Application Publication No. S55-13468, Japanese Laid-Open Patent Application Publication No. S57-164123, Japanese Examined Patent Application Publication No. H3-2450, U.S. Patent No. 3632557, U.S. Patent No. 4345053, U.S. Patent No. 4366307, and U.S. Patent No. 4960844; reactive silicon group introduction proposed in publications such as Japanese Laid-Open Patent Application Publication No. S61-197631, Japanese Laid-Open Patent Application Publication No. S61-215622, Japanese Laid-Open Patent Application Publication No. S61-215623, and Japanese Laid-Open Patent Application Publication No. S61-218632, in which reactive silicon groups are introduced by hydrosilylation or any other means into a polyoxypropylene polymer having a high molecular weight and a narrow molecular weight distribution, in particular a polyoxypropylene polymer having a number-average molecular weight of 6,000 or more and a dispersity Mw/Mn of 1.6 or less; and reactive silicon group introduction proposed in Japanese Laid-Open Patent Application Publication No. H3-72527.

The dispersity (Mw/Mn) of the reactive silicon group-containing organic polymer (A) is preferably 1.6 or less, more preferably 1.5 or less, and particularly preferably 1.4 or less. The dispersity is preferably 1.2 or less in terms of improving various mechanical properties such as the durability and elongation of the cured product.

The number-average molecular weight of the reactive silicon group-containing organic polymer (A) is preferably from 3,000 to 100,000, more preferably from 5,000 to 50,000, and particularly preferably from 8,000 to 35,000. If the number-average molecular weight is less than 3,000, the elongation-at-break properties of the cured product made with the reactive silicon group-containing organic polymer (A) deteriorate. If the number-average molecular weight is more than 100,000, the reactive silicon group concentration tends to be too low, and the curing speed tends to be slow. Additionally, the reactive silicon group-containing organic polymer (A) tends to have too high a viscosity and be difficult to handle.

The number-average molecular weight of the reactive silicon group-containing organic polymer (A) is defined as a molecular weight (end group molecular weight) corresponding to a number-average molecular weight determined by directly measuring the end group concentration through titration analysis based on the principles of the hydroxy value measurement method as specified in JIS K 1557 and the iodine value measurement method as specified in JIS K 0070 and by making a calculation taking into account the architecture of the organic polymer (the degree of branching which depends on the polymerization initiator used).

The number-average molecular weight of the reactive silicon group-containing organic polymer (A) may be determined by a relative measurement method in which: a calibration curve is created which represents the relationship between the polystyrene-equivalent number-average molecular weight of the organic polymer precursor as determined by common GPC analysis (GPC molecular weight) and the end group molecular weight; and the GPC molecular weight of the reactive silicon group-containing organic polymer (A) is converted to the end group molecular weight based on the calibration curve.

To obtain a desired rubber-like cured product, the reactive silicon groups of the reactive silicon group-containing organic polymer (A) are preferably located in the polymer chain. The number of the reactive silicon groups in the organic polymer (A) is preferably 0.5 or more, more preferably 0.6 or more, even more preferably 0.7 or more, and particularly preferably 0.8 or more, on average per polymer chain end. When the number of the reactive silicon groups in the organic polymer (A) is 0.5 or more on average per polymer chain end, the organic polymer (A) tends to have higher curability and exhibit a desired rubber elastic behavior.

To further reduce the water absorbency of the cured product, the number of the reactive silicon groups is preferably 0.7 or more, more preferably 0.8 or more, even more preferably 0.9 or more, still even more preferably 1.0 or more, and particularly preferably 1.2 or more, on average per polymer chain end. The water absorbency-reducing effect is notably significant when the integer a in the formula (1) representing the reactive silicon groups is 3 (especially when the reactive silicon groups are trimethoxysilyl groups).

The upper limit of the number of the reactive silicon groups in the organic polymer (A) is not limited to a particular number. The number of the reactive silicon groups may be, for example, 4 or less or 3 or less on average per polymer chain end.

The number of the polymer chain ends per molecule of the organic polymer (A) is preferably from 2 to 8, more preferably from 2 to 4, and particularly preferably 2 or 3. The number of the reactive silicon groups per molecule of the organic polymer (A) is preferably from 1 to 7, more preferably from 1 to 3.4, and particularly preferably from 1 to 2.6 on average.

When the reactive silicon group-containing organic polymer (A) is branched, the reactive silicon groups may be located at the ends of the main chains of the molecules of the organic polymer, at the ends of the side chains (branches) of the molecules of the organic polymer, or at the ends of both the main chains and the side chains. In particular, it is preferable for the reactive silicon groups to be at the ends of the main chains of the molecules because in this case the molecular weight between crosslinks is increased and a rubber-like cured product that exhibits high strength, high elongation, and low elastic modulus is likely to be obtained.

As described in WO 2013/180203, the organic polymer (A) has two or more reactive silicon groups at each polymer chain end when obtained by the method (a) or (c) using an organic polymer having two or more unsaturated carbon-carbon bonds at each polymer chain end. Such a organic polymer (A) exhibits high curability, and the use of it is expected to result in a cured product having high strength and high recovery performance. Additionally, the reducing effect on the water absorbency of the cured product can be enhanced.

Specific examples of commercially-available products corresponding to the reactive silicon group-containing organic polymer (A) include: reactive silicon group-containing polyoxypropylene products manufactured by Kaneka Corporation under the trade name Kaneka MS Polymer or Kaneka Silyl; reactive silicon group-containing poly(meth)acrylic esters manufactured by Kaneka Corporation under the trade name Kaneka TA Polymer or Kaneka XMAP; and reactive silicon group-containing polyisobutylene manufactured by Kaneka Corporation under the trade name Kaneka EPION.

### (Curing Catalyst (B))

The curable composition according to the present disclosure contains a curing catalyst (B) for hydrolyzing and condensing the reactive silicon group-containing organic polymer (A) to give a cured product.

The curing catalyst (B) according to the present disclosure is characterized by containing three catalyst components to ensure the effect of the invention. Specifically, the curing catalyst (B) contains an organic carboxylic acid (b1), an organic amine compound (b2), and a metal compound (b3) represented by the following formula (2).

M(OR²)_{d}Y_{e-d} (2)

In the formula, M is a metal atom having a valence e and selected from titanium metal, aluminum metal, zirconium metal, and hafnium metal, e is the valence of the central metal, R² is a substituted or unsubstituted hydrocarbon group having 1 to 20 carbon atoms, Y is a chelate coordination compound, and d is 0 or an integer from 1 to e.

The organic carboxylic acid (b1) may be, for example, a compound having one carboxyl group (-COOH) or two or more carboxyl groups (preferably one carboxyl group) and having 1 to 30 carbon atoms (preferably 2 to 20, more preferably 6 to 12, carbon atoms) in the molecule.

The organic carboxylic acid (b1) is not limited to a particular type, and specific examples of aliphatic monocarboxylic acids include: linear saturated fatty acids such as acetic acid, propionic acid, butyric acid, valeric acid, caproic acid, enanthic acid, caprylic acid, pelargonic acid, capric acid, undecanoic acid, lauric acid, tridecylic acid, myristic acid, pentadecylic acid, palmitic acid, heptadecylic acid, stearic acid, nonadecanoic acid, arachic acid, behenic acid, lignoceric acid, cerotic acid, montanic acid, melissic acid, and lacceric acid; monounsaturated fatty acids such as undecylenic acid, linderic acid, tsuzuic acid, physeteric acid, myristoleic acid, 2-hexadecenoic acid, 6-hexadecenoic acid, 7-hexadecenoic acid, palmitoleic acid, petroselinic acid, oleic acid, elaidic acid, asclepic acid, vaccenic acid, gadoleic acid, gondoic acid, cetoleic acid, erucic acid, brassidic acid, selacholeic acid, ximenic acid, lumequic acid, acrylic acid, methacrylic acid, angelic acid, crotonic acid, isocrotonic acid, and 10-undecenoic acid; polyunsaturated fatty acids such as linoelaidic acid, linoleic acid, 10,12-octadecadienoic acid, hiragonic acid, α-eleostearic acid, β-eleostearic acid, punicic acid, linolenic acid, 8,11,14-eicosatrienoic acid, 7,10,13-docosatrienoic acid, 4,8,11,14-hexadecatetraenoic acid, moroctic acid, stearidonic acid, arachidonic acid, 8,12,16,19-docosatetraenoic acid, 4,8,12,15,18-eicosapentaenoic acid, clupanodonic acid, nisinic acid, and docosahexaenoic acid; branched fatty acids such as 2-methylbutyric acid, isobutyric acid, 2-ethylbutyric acid, pivalic acid, 2,2-dimethylbutyric acid, 2-ethyl-2-methylbutyric acid, 2,2-diethylbutyric acid, 2-phenylbutyric acid, isovaleric acid, 2,2-dimethylvaleric acid, 2-ethyl-2-methylvaleric acid, 2,2-diethylvaleric acid, 2-ethylhexanoic acid, 2,2-dimethylhexanoic acid, 2,2-diethylhexanoic acid, 2,2-dimethyloctanoic acid, 2-ethyl-2,5-dimethylhexanoic acid, versatic acid, neodecanoic acid, and tuberculostearic acid; triple bond-containing fatty acids such as propiolic acid, tariric acid, stearolic acid, crepenynic acid, ximenynic acid, and 7-hexadecynoic acid; alicyclic carboxylic acids such as naphthenic acid, malvalic acid, sterculic acid, hydnocarpic acid, chaulmoogric acid, gorlic acid, I-methylcyclopentanecarboxylic acid, 1-methylcyclohexanecarboxylic acid, 1-adamantanecarboxylic acid, bicyclo[2.2.2]octane-1-carboxylic acid, and bicyclo[2.2.1]heptane-1-carboxylic acid; oxygen-containing fatty acids such as acetoacetic acid, ethoxyacetic acid, glyoxylic acid, glycolic acid, gluconic acid, sabinic acid, 2-hydroxytetradecanoic acid, ipurolic acid, 2-hydroxyhexadecanoic acid, jalapinolic acid, juniperic acid, ambrettolic acid, aleuritic acid, 3-hydroxyisoacetic acid, 2-hydroxyoctadecanoic acid, 12-hydroxyoctadecanoic acid, 18-hydroxyoctadecanoic acid, 9,10-dihydroxyoctadecanoic acid, 2,2-dimethyl-3-hydroxypropionic acid, ricinoleic acid, kamlolenic acid, licanic acid, phellonic acid, and cerebronic acid; and halogenated monocarboxylic acids such as chloroacetic acid and 2-chloroacrylic acid.

Examples of aliphatic dicarboxylic acids include: chain dicarboxylic acids such as adipic acid, azelaic acid, pimelic acid, suberic acid, sebacic acid, glutaric acid, oxalic acid, malonic acid, ethylmalonic acid, dimethylmalonic acid, ethylmethylmalonic acid, diethylmalonic acidv, succinic acid, 2,2-dimethylsuccinic acid, 2,2-diethylsuccinic acid, and 2,2-dimethylglutaric acid; saturated dicarboxylic acids such as 1,2,2-trimethyl-1,3-cyclopentanedicarboxylic acid and oxydiacetic acid; and unsaturated dicarboxylic acids such as maleic acid, fumaric acid, acetylenedicarboxylic acid, and itaconic acid. Examples of aliphatic polycarboxylic acids include chain tricarboxylic acids such as aconitic acid, citric acid, isocitric acid, 3-methylisocitric acid, and 4,4-dimethylaconitic acid.

Examples of aromatic carboxylic acids include: aromatic monocarboxylic acids such as benzoic acid, 9-anthracenecarboxylic acid, atrolactic acid, anisic acid, isopropylbenzoic acid, salicylic acid, and toluic acid; aromatic polycarboxylic acids such as phthalic acid, isophthalic acid, terephthalic acid, carboxyphenylacetic acid, and pyromellitic acid; and halogenated aromatic carboxylic acids such as chlorobenzoic acid. Carboxylic acid derivatives the hydrolysis of which gives a carboxylic acid can also be used, and examples of such derivatives include anhydrides, esters, amides, nitriles, and acyl chlorides of carboxylic acids.

The organic carboxylic acid (b1) is preferably 2-ethylhexanoic acid, octylic acid, neodecanoic acid, oleic acid, or naphthenic acid since these carboxylic acids are easily available, inexpensive, and compatible well with the reactive silicon group-containing organic polymer (A). Neodecanoic acid is particularly preferred since its use is likely to provide high catalytic activity. The organic carboxylic acid (b1) may consist of a single component or may be a combination of two or more components.

The organic amine compound (b2) may be, for example, a compound having one or more amino groups (preferably one amino group or two amino groups) and having 1 to 30 carbon atoms (preferably 3 to 20, more preferably 5 to 12, carbon atoms) in the molecule. The amino group may be an unsubstituted amino group (-NH₂) or a substituted amino group (-NHR or -NRR'). An aminosilane as descried later (i.e., a compound having a hydrolyzable silicon group and an amino group) is not classified as the organic amine compound (b2).

Specific examples of the organic amine compound (b2) include: aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; aliphatic secondary amines such as dimethylamine, diethylamine, dipropylamine, diisopropylamine, dibutylamine, diamylamine, dihexylamine, dioctylamine, di(2-ethylhexyl)amine, didecylamine, dilaurylamine, dicetylamine, distearylamine, methylstearylamine, ethylstearylamine, butylstearylamine, pyrrolidine, piperidine, 2-methylpiperidine, 4-methylpiperidine, hexamethylpiperazine, and hexamethyleneimine; aliphatic tertiary amines such as triamylamine, trihexylamine, and trioctylamine; aliphatic unsaturated amines such as triallylamine and oleylamine; aromatic amines such as aniline, laurylaniline, stearylaniline, and triphenylamine; and other amines such as monoethanolamine, diethanolamine, triethanolamine, 3-hydroxypropylamine, ethylenediamine, propylenediamine, hexamethylenediamine, N-methyl-1,3-propanediamine, *N*,*N*'-dimethyl-1,3-propanediamine, diethylenetriamine, triethylenetetramine, 2-(2-aminoethylamino)ethanol, benzylamine, 3-methoxypropylamine, 3-lauryloxypropylamine, 3-dimethylaminopropylamine, 3-diethylaminopropylamine, 3-dibutylaminopropylamine, 3-morpholinopropylamine, 2-(1-piperazinyl)ethylamine, xylylenediamine, and 2,4,6-tris(dimethylaminomethyl)phenol.

In terms of availability, compatibility with the organic polymer (A), and curability, 3-dimethylaminopropylamine, 3-diethylaminopropylamine, or 4-methylpiperzine is suitable for use. The organic amine compound (b2) may consist of a single component or may be a combination of two or more components.

The metal compound (b3) is represented by the following formula (2).

M(OR²)_{d}Y_{e-d} (2)

In the formula, M is a metal atom having a valence e and selected from titanium metal, aluminum metal, zirconium metal, and hafnium metal, e is the valence of the central metal, R² is a substituted or unsubstituted hydrocarbon group having 1 to 20 carbon atoms, Y is a chelate coordination compound, and d is 0 or an integer from 1 to e.

The substituted or unsubstituted hydrocarbon group represented by R² is preferably a substituted or unsubstituted aliphatic or aromatic hydrocarbon group and more preferably an aliphatic hydrocarbon group. The aliphatic hydrocarbon group is, for example, a saturated or unsaturated hydrocarbon group. The saturated hydrocarbon group is preferably a linear or branched alkyl group. The number of carbon atoms in the hydrocarbon group is preferably from 1 to 10, more preferably from 1 to 6, and even more preferably from 1 to 4.

Examples of the hydrocarbon group represented by R² include methyl, ethyl, propyl, isopropyl, butyl, isobutyl, *sec*-butyl, *tert-butyl,* pentyl, hexyl, heptyl, octyl, 2-ethylhexyl, nonyl, and decyl groups. Examples of the substituent with which the hydrocarbon group may be substituted include methoxy, ethoxy, hydroxy, and acetoxy groups. When there are a plurality of R² groups, the R² groups may be the same or different.

The chelate coordination compound represented by Y may be any compound that is known to coordinate with titanium, aluminum, zirconium, or hafnium. Examples of the compound include, but are not limited to: 2,4-pentanedione; 2,4-hexanedione; 2,4-pentadecanedione; 2,2,6,6-tetramethyl-3,5-heptanedione; 1-aryl-1,3-butanediones such as 1-phenyl-1,3-butanedione and 1-(4-methoxyphenyl)-1,3-butanedione; 1,3-diaryl-1,3-propanediones such 1,3-diphenyl-1,3-propanedione, 1,3-bis(2-pyridyl)-1,3-propanedione, and 1,3-bis(4-methoxyphenyl)-1,3-propanedione; diketones such as 3-benzyl-2,4-pentanedione; ketoesters such as methyl acetoacetate, ethyl acetoacetate, butyl acetoacetate, t-butyl acetoacetate, and ethyl 3-oxohexanoate; ketoamides such as *N*,*N*-dimethylacetoacetamide, *N*,*N*-diethylacetoacetamide, and acetoacetanilide; malonic esters such as dimethyl malonate, diethyl malonate, and diphenyl malonate; and malonic amides such as *N*,*N*,*N*',*N*'-tetramethylmalonamide and *N*,*N*,*N*',*N*'-tetraethylmalonamide. Among these, diketones and ketoesters are preferred. When there are a plurality of Y compounds, the Y compounds may be the same or different.

The letter e is the valence of the central atom, and d is 0 or an integer from 1 to e. To further improve the curability, d is preferably 2, 3, or 4 and particularly preferably 4.

Specific examples of the metal compound (b3) include the following various metal alkoxide compounds: titanium compounds such as tetrabutyl titanate, tetrapropyl titanate, titanium tetrakis(acetylacetonate), bis(acetylacetonato)diisopropoxytitanium, and diisopropoxytitanium bis(ethyl acetoacetate); aluminum compounds such as triisopropoxyaluminum, tri-*tert*-butoxyaluminum, tri-*sec*-butoxyaluminum, tri-*n*-butoxyaluminum, aluminum tris(acetylacetonate), aluminum tris(ethyl acetoacetate), and diisopropoxyaluminum ethyl acetoacetate; zirconium compounds such as zirconium tetrakis(acetylacetonate); and tetrabutoxyhafnium.

In terms of availability, compatibility with the organic polymer (A), and curability, tetraisopropoxytitanium, diisopropoxytitanium bis(ethyl acetoacetate), triisopropoxyaluminum, tri-*tert*-butoxyaluminum, tri-*sec*-butoxyaluminum, and tri-*n*-butoxyaluminum are more preferred, and tetraisopropoxytitanium and diisopropoxytitanium bis(ethyl acetoacetate) are particularly preferred. The use of an aluminum compound, in particular triisopropoxyaluminum, is particularly preferred in terms of activity and colorlessness. The metal compound (b3) may consist of a single component or may be a combination of two or more components.

Titanium compounds classified as the metal compound (b3) are easily colored; thus when the intended application of the curable composition requires transparency or whiteness, the amount of such a titanium compound is preferably small. The amount of the titanium compound classified as the metal compound (b3) is preferably 0.1 parts by weight or less, more preferably 0.05 parts by weight or less, and even more preferably 0.01 parts by weight or less per 100 parts by weight of the organic polymer (A). More preferably, no titanium compound is contained.

In production of the curable composition according to the present disclosure, the organic carboxylic acid (b1), the organic amine compound (b2), and the metal compound (b3) may be individually added to and mixed with the organic polymer (A) without reacting the components (b1), (b2), and (b3) with each other beforehand, or a mixture of the components (b1), (b2), and (b3) may be added to and mixed with the organic polymer (A) without reacting the components (b1), (b2), and (b3) with each other beforehand. In particular, to achieve a significant effect on reducing the water absorption rate of the cured product, the components (b1) to (b3) may be individually added to and mixed with the organic polymer (A) without reacting the organic carboxylic acid (b1) and the metal compound (b3) with each other beforehand, or a mixture of the components (b1), (b2), and (b3) may be added to and mixed with the organic polymer (A) without reacting the organic carboxylic acid (b1) and the metal compound (b3) with each other beforehand.

Alternatively, part or all of the components (b1), (b2), and (b3) may be reacted first, and then the reaction product may be added to the organic polymer (A). For example, the components (b1) and (b2) may be reacted, and then the reaction product and the component (b3) may be individually added to and mixed with the organic polymer (A), or a mixture of the reaction product and the compound (b3) may be added to and mixed with the organic polymer (A).

For example, mixing the organic carboxylic acid (b1) and the organic amine compound (b2) of the catalyst components leads to formation of a carboxylic acid-amine complex. Such a complex may be added to the organic polymer (A). Depending on the combination of the organic carboxylic acid (b1) and the organic amine compound (b2), the carboxylic acid-amine complex is expected to be liquid at room temperature and have high workability.

In some cases, a reaction of the organic carboxylic acid (b1) and the metal compound (b3) involves ligand exchange between the ligand on the metal and the carboxylic acid (b1), resulting in formation of a metal carboxylate. Such a metal carboxylate may or may not be added to the organic polymer (A).

As seen from the above discussion, whether to use the catalyst components individually or in the form of a mixture or a reaction product is preferably chosen as appropriate depending on the characteristics of each catalyst component and their combination. When a reaction product is used, a component released due to ligand exchange or any other cause may be removed. When the catalyst components are liquid under conditions of use in making of the curable composition, adding the catalyst components individually is preferred in terms of workability. When the catalyst components are solid, they may be turned into liquids by means such as a solvent, and the liquids may be used. Two or more of the catalyst components can in some cases be turned together into a liquid by mixing or reacting the two or more catalyst components, and this is a preferred option.

The total amount of the curing catalyst (B) containing the components (b1), (b2), and (b3) in the curable composition according to the present disclosure may be chosen as appropriate in view of the desired level of curability and the workability of the curable composition. The total amount of the curing catalyst (B) may be, for example, from about 0.001 to about 20 parts by weight per 100 parts by weight of the reactive silicon group-containing organic polymer (A) and is preferably from 0.01 to 15 parts by weight, more preferably from 0.1 to 10 parts by weight, and even more preferably from 1 to 8 parts by weight per 100 parts by weight of the reactive silicon group-containing organic polymer (A).

The ratio between the organic carboxylic acid (b1) and the organic amine (b2) in the curable composition may be set as appropriate. The molar ratio (bl):(b2) may be, for example, from about 0.1:1 to about 10:1. In terms of curability, the molar ratio (b1):(b2) is preferably from 0.2:1 to 8:1 and more preferably from 0.5:1 to 5:1.

The ratio between the organic carboxylic acid (b1) and the metal compound (b3) may also be set as appropriate. The molar ratio (b2):(b3) may be, for example, from about 0.1:1 to about 10:1. In terms of curability, the molar ratio is preferably from 1:1 to 6:1 and more preferably from 2:1 to 5:1.

The curable composition according to the present disclosure may contain a condensation catalyst other than the curing catalyst (B). Examples of condensation catalysts that can be used include: amidines such as 1,2-dimethyl-1,4,5,6-tetrahydropyrimidine, DBU, DBA-DBU, and DBN; guanidines such as guanidine, 1,1,3,3-tetramethylguanidine, butylguanidine, phenylguanidine, and diphenylguanidine; metal carboxylates, including tin carboxylates such as tin 2-ethylhexanoate and tin neodecanoate, lead carboxylates, bismuth carboxylates such as bismuth 2-ethylhexanoate and bismuth neodecanoate, potassium carboxylates such as potassium neodecanoate, calcium carboxylates, barium carboxylates, vanadium carboxylates, manganese carboxylates, iron carboxylates, cobalt carboxylates, nickel carboxylates, and cerium carboxylates; dibutyltin compounds such as dibutyltin dilaurate, dibutyltin maleate, dibutyltin phthalate, dibutyltin dioctanoate, dibutyltin bis(2-ethylhexanoate), dibutyltin bis(methyl maleate), dibutyltin bis(ethyl maleate), dibutyltin bis(butyl maleate), dibutyltin bis(octyl maleate), dibutyltin bis(tridecyl maleate), dibutyltin bis(benzyl maleate), dibutyltin diacetate, dibutyltin dimethoxide, dibutyltin bis(nonylphenoxide), dibutenyltin oxide, dibutyltin oxide, dibutyltin bis(acetylacetonate), dibutyltin bis(ethyl acetoacetonate), a reaction product of dibutyltin oxide and a silicate compound, and a reaction product of dibutyltin oxide and a phthalic ester; organic acidic esters of phosphoric acid; organic sulfonic acids such as trifluoromethanesulfonic acid; and inorganic acids such as hydrochloric acid, phosphoric acid, and boronic acid.

The amount of the condensation catalyst other than the curing catalyst (B) is not limited to a particular range and may be set as appropriate. The amount of the condensation catalyst may be, for example, from 0 to 10 parts by weight, from 0 to 5 parts by weight, or from 0 to 3 parts by weight per 100 parts by weight of the reactive silicon group-containing organic polymer (A). In particular, the amount of an organotin compound used as the condensation catalyst is preferably small in terms of environmental safety and is preferably from 0 to 1 parts by weight and more preferably from 0 to 0.1 parts by weight.

The curable composition according to the present disclosure may contain a silane coupling agent (C). The silane coupling agent (C) is a compound having a hydrolyzable silicon group and a functional group other than the hydrolyzable silicon group in the molecule. The use of this compound provides a notable enhancing effect on the adhesion of the curable composition when the curable composition is applied to various kinds of adherends treated or untreated with a primer. Examples of the adherends include: inorganic substrates such as those made of glass, aluminum, stainless steel, zinc, copper, or mortar; and organic substrates such as those made of vinyl chloride, acrylic resin, polyester, polyethylene, polypropylene, or polycarbonate. The enhancing effect on the adhesion to adherends is especially significant when the adherends are untreated with any primer. The silane coupling agent (C) is a compound that can function also as a dehydrating agent, a property modifier, or a dispersibility improver for an inorganic filler.

Examples of the hydrolyzable group in the hydrolyzable silicon group of the silane coupling agent include, but are not limited to, a hydrogen atom, halogen atoms, and alkoxy, aryloxy, alkenyloxy, acyloxy, ketoximate, amino, amide, acid amide, aminooxy, and mercapto groups. Among these, halogen atoms and alkoxy, alkenyloxy, and aryloxy groups are preferred due to their high activity. A chlorine atom and an alkoxy group are preferred since they are easy to introduce. In terms of moderate hydrolyzability and ease of handling, alkoxy groups such as methoxy and ethoxy groups are more preferred, and methoxy and ethoxy groups are particularly preferred. Ethoxy and isopropenoxy groups are preferred in terms of safety since the compound released as a result of reaction is ethanol when the hydrolyzable group is an ethoxy group and acetone when the hydrolyzable group is an isopropenoxy group. In some cases, the number of the hydrolyzable groups bonded to the silicon atom in the silane coupling agent is preferably three to ensure high adhesion. In other cases, the number of the hydrolyzable groups bonded to the silicon atom in the silane coupling agent is preferably two to ensure the storage stability of the curable composition.

When the silane coupling agent is used as an adhesion promoter, the silane coupling agent is preferably an aminosilane having a hydrolyzable silicon group and a substituted or unsubstituted amino group since such an aminosilane has a significant adhesion-enhancing effect. Examples of the substituent of the substituted amino group include, but are not limited to, alkyl, aralkyl, and aryl groups.

Specific examples of the aminosilane include: amino group-containing silanes such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-(2-(2-aminoethyl)aminoethyl)aminopropyltrimethoxysilane, γ-(6-aminohexyl)aminopropyltrimethoxysilane, 3-(*N*-ethylamino)-2-methylpropyltrimethoxysilane, γ-ureidopropyltrimethoxysilane, γ-ureidopropyltriethoxysilane, *N-*phenyl-γ-aminopropyltrimethoxysilane, *N*-benzyl-γ-aminopropyltrimethoxysilane, *N*-vinylbenzyl-γ-aminopropyltriethoxysilane, *N*-cyclohexylaminomethyltriethoxysilane, *N*-cyclohexylaminomethyldiethoxymethylsilane, *N*-phenylaminomethyltrimethoxysilane, *N*-butylaminopropyltrimethoxysilane, (2-aminoethyl)aminomethyltrimethoxysilane, *N*,*N*'-bis[3-(trimethoxysilyl)propyl]ethylenediamine, and bis(trimethoxysilylpropyl)amine; and ketimine-type silanes such as *N-*(1,3-dimethylbutylidene)-3-(triethoxysilyl)-1-propaneamine.

Among the above aminosilanes, γ-aminopropyltrimethoxysilane, γ-(2-aminoethyl)aminopropyltrimethoxysilane, and γ-(2-aminoethyl)aminopropylmethyldimethoxysilane are preferred to ensure high adhesion. One aminosilane may be used alone, or two or more aminosilanes may be used in combination. It is pointed out that γ-(2-aminoethyl)aminopropyltrimethoxysilane is more irritating than other aminosilanes. The irritating effect can be alleviated by using γ-aminopropyltrimethoxysilane in combination with γ-(2-aminoethyl)aminopropyltrimethoxysilane instead of reducing the amount of the latter aminosilane. A silane coupling agent formed as an oligomer through partial condensation of hydrolyzable silicon groups is suitable for use in terms of safety and stability. One silane coupling agent may be subjected to condensation, or two or more silane coupling agents may be subjected to condensation. Examples of the silane coupling agent formed as an oligomer include Dynasylan 1146 of Evonik. To ensure the storage stability of the curable composition, γ-aminopropyltrimethoxysilane and γ-(2-aminoethyl)aminopropylmethyldimethoxysilane are preferred.

Specific examples of silane coupling agents other than aminosilanes include: epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane; isocyanate group-containing silanes such as γ-isocyanatopropyltrimethoxysilane, γ-isocyanatopropyltriethoxysilane, γ-isocyanatopropylmethyldiethoxysilane, γ-isocyanatopropylmethyldimethoxysilane, (isocyanatomethyl)trimethoxysilane, and (isocyanatomethyl)dimethoxymethylsilane; mercapto group-containing silanes such as γ-mercaptopropyltrimethoxysilane, γ-mercaptopropyltriethoxysilane, γ-mercaptopropylmethyldimethoxysilane, γ-mercaptopropylmethyldiethoxysilane, and mercaptomethyltriethoxysilane; carboxysilanes such as β-carboxyethyltriethoxysilane, β-carboxyethylphenylbis(2-methoxyethoxy)silane, and *N-β*-(carboxymethyl)aminoethyl-γ-aminopropyltrimethoxysilane; vinyl-type unsaturated group-containing silanes such as vinyltrimethoxysilane, vinyltriethoxysilane, γ-methacryloyloxypropylmethyldimethoxysilane, and γ-acryloyloxypropylmethyltriethoxysilane; halogen-containing silanes such as γ-chloropropyltrimethoxysilane; and isocyanurate silanes such as tris(trimethoxysilyl) isocyanurate. A condensation product resulting from partial condensation of any of the above silanes can also be used. Examples of such a condensation product include Dynasylan 6490 and Dynasylan 6498 of Evonik. Derivatives resulting from modification of these silanes can also be used as silane coupling agents, and examples of the derivatives include amino-modified silyl polymers, silylated amino polymers, unsaturated aminosilane complexes, phenylamino-long-chain-alkylsilanes, aminosilylated silicone, and silylated polyester.

Among the silane coupling agents mentioned above, γ-glycidoxypropyltrimethoxysilane, γ-glycidoxypropyltriethoxysilane, and γ-glycidoxypropylmethyldimethoxysilane are preferred to ensure high adhesion.

The amount of the silane coupling agent (C) used is preferably from about 0.01 to about 20 parts by weight, more preferably from about 0.1 to about 10 parts by weight, and particularly preferably from about 1 to about 7 parts by weight per 100 parts by weight of the reactive silicon group-containing organic polymer (A). If the amount of the silane coupling agent is below the above range, a satisfactory adhesion-enhancing effect cannot be obtained in some cases. If the amount of the silane coupling agent is above the above range, a practical level of depth curability cannot be obtained in some cases.

The silane coupling agent (C) used may consist only of one silane coupling agent or may be a mixture of two or more silane coupling agents.

The curable composition according to the present disclosure may contain a plasticizer, an adhesion promoter, a filler, a property modifier, an anti-sagging agent (thixotropic agent), a stabilizer etc. added as necessary.

A plasticizer may be added to the curable composition. By the addition of the plasticizer, the following properties can be adjusted: the viscosity and slump resistance of the curable composition and the mechanical properties such as the tensile strength and elongation of the cured product obtained by curing the curable composition. Specific examples of the plasticizer include: phthalic ester compounds such as dibutyl phthalate, diisononyl phthalate (DINP), diheptyl phthalate, di(2-ethylhexyl) phthalate, diisodecyl phthalate (DIDP), and butyl benzyl phthalate; terephthalic ester compounds such as bis(2-ethylhexyl)-1,4-benzenedicarboxylate (a specific example is a product manufactured by EASTMAN CHEMICAL under the trade name "EASTMAN 168"); non-phthalic ester compounds such as 1,2-cyclohexanedicarboxylic acid diisononyl ester (a specific example is a product manufactured by BASF under the trade name "Hexamoll DINCH"; aliphatic polycarboxylic ester compounds such as dioctyl adipate, dioctyl sebacate, dibutyl sebacate, diisodecyl succinate, and tributyl acetylcitrate; unsaturated fatty acid ester compounds such as butyl oleate and methyl acetyl ricinoleate; alkylsulfonic phenyl esters (a specific example is a product manufactured by LANXESS under the trade name "Mesamoll"); phosphoric ester compounds such as tricresyl phosphate and tributyl phosphate; trimellitic ester compounds; chlorinated paraffin; hydrocarbon oils such as alkyl diphenyl and partially-hydrogenated terphenyl; process oil; and epoxy plasticizers such as epoxidized soybean oil and benzyl epoxystearate. Among these, aliphatic carboxylic esters such as 1,2-cyclohexanedicarboxylic acid diisononyl ester are preferred since a cured product obtained from the curable composition made using an aliphatic carboxylic ester is likely to have low water absorbency.

A polymeric plasticizer can also be used. The use of the polymeric plasticizer allows for maintenance of initial physical properties over a longer period of time than the use of a low-molecular-weight plasticizer which contains no polymer component in the molecule. In addition, the use of the polymeric plasticizer allows the cured product to exhibit improved dryability (coatability) when an alkyd paint is applied to the cured product. Specific examples of the polymeric plasticizer include, but are not limited to: vinyl polymers obtained by polymerizing a vinyl monomer using any of various methods; polyalkylene glycol esters such as diethylene glycol dibenzoate, triethylene glycol dibenzoate, and pentaerythritol ester; polyester plasticizers obtained from a combination of a dibasic acid such as sebacic acid, adipic acid, azelaic acid, or phthalic acid and a dihydric alcohol such as ethylene glycol, diethylene glycol, triethylene glycol, propylene glycol, or dipropylene glycol; polyethers such as polyether polyols (e.g., polyethylene glycol, polypropylene glycol, and polytetramethylene glycol which have a number-average molecular weight of 500 or more or a number-average molecular weight of 1,000 or more) and derivatives resulting from conversion of the hydroxy groups of the polyether polyols to ester or ether groups; polystyrenes such as polystyrene and poly-α-methylstyrene; polybutadiene; polybutene; polyisobutylene; butadiene-acrylonitrile; and polychloroprene.

Among the above polymeric plasticizers, those compatible with the reactive silicon group-containing organic polymer (A) are preferred. From this viewpoint, polyethers and vinyl polymers are preferred. The use of a polyether as a plasticizer can improve surface curability and depth curability and prevent delayed curing after storage. Polypropylene glycol is more preferred. In terms of compatibility, weathering resistance, and heat resistance, vinyl polymers are preferred. Preferred among vinyl polymers are acrylic polymers and/or methacrylic polymers, and acrylic polymers such as polyalkyl acrylates are more preferred. The method used to synthesize such a polymer is preferably living radical polymerization and more preferably atom-transfer radical polymerization in order to allow the polymer to have a narrow molecular weight distribution and a low viscosity. It is preferable to use a polymer obtained by a method as described in Japanese Laid-Open Patent Application Publication No. 2001-207157; this method is a so-called SGO process in which an alkyl acrylate monomer is subjected to continuous bulk polymerization at high temperature and high pressure.

The number-average molecular weight of the polymeric plasticizer is preferably from 500 to 15,000, more preferably from 800 to 10,000, even more preferably from 1,000 to 8,000, and particularly preferably from 1,000 to 5,000. Most preferably, the number-average molecular weight is from 1,000 to 3,000. If the molecular weight is too low, the plasticizer flows out over time due to heat or rain, and the initial physical properties cannot be maintained over a long period of time. If the molecular weight is too high, this leads to a high viscosity and low workability.

The polymeric plasticizer is not limited to having a particular molecular weight distribution, but preferably has a narrow molecular weight distribution. The dispersity of the polymeric plasticizer is preferably less than 1.80. The dispersity is more preferably 1.70 or less, even more preferably 1.60 or less, still even more preferably 1.50 or less, particularly preferably 1.40 or less, and most preferably 1.30 or less.

The number-average molecular weight of the polymeric plasticizer is measured by GPC analysis when the polymeric plasticizer is a vinyl polymer and by end group analysis when the polymeric plasticizer is a polyether polymer. The dispersity (Mw/Mn) is measured by GPC analysis (polystyrene equivalent).

The polymeric plasticizer may or may not have reactive silicon groups. When having reactive silicon groups, the polymeric plasticizer acts as a reactive plasticizer and can be prevented from moving out of the cured product. When the polymeric plasticizer has reactive silicon groups, the number of the reactive silicon groups is preferably 1 or less and more preferably 0.8 or less on average per molecule. When a reactive silicon group-containing plasticizer, in particular a reactive silicon group-containing polyether polymer is used, its number-average molecular weight needs to be lower than that of the reactive silicon group-containing organic polymer (A).

The amount of a plasticizer used is preferably from 5 to 150 parts by weight, more preferably from 10 to 120 parts by weight, and even more preferably from 20 to 100 parts by weight per 100 parts by weight of the reactive silicon group-containing organic polymer (A). If the amount of the plasticizer is less than 5 parts by weight, the plasticizer cannot exhibit the desired effect. If the amount of the plasticizer is more than 150 parts by weight, the cured product suffers from insufficient mechanical strength. One plasticizer may be used alone, or two or more plasticizers may be used in combination. A low-molecular-weight plasticizer and a polymeric plasticizer may be used in combination. Plasticizers as described above can be added at the time of polymer production.

Various fillers can be added to the curable composition. Examples of the fillers include: reinforcing fillers such as fumed silica, precipitated silica, crystalline silica, molten silica, dolomite, silicic anhydride, hydrated silicic acid, and carbon black; fillers such as ground calcium carbonate, colloidal calcium carbonate, magnesium carbonate, diatomite, baked clay, clay, talc, titanium oxide, bentonite, organic bentonite, ferric oxide, aluminum fines, flint powder, zinc oxide, activated zinc oxide, and resin powders such as PVC powder and PMMA powder; and fibrous fillers such as asbestos and glass fibers or filaments. When a filler is used, the amount of the filler is preferably from 1 to 300 parts by weight and more preferably from 10 to 200 parts by weight per 100 parts by weight of the reactive silicon group-containing organic polymer (A).

In the case where the use of a filler is intended to further enhance the strength of the cured product, it is preferable to select the filler mainly from fumed silica, precipitated silica, crystalline silica, molten silica, dolomite, silicic anhydride, hydrated silicic acid, carbon black, surface-treated fine calcium carbonate, baked clay, clay, and activated zinc oxide. "Sillitin" and "Aktifit", which are industrial products of Hoffmann Mineral, and "Portafill" of Sibelco are also effective to enhance the strength of the cured product. The use of the filler can provide a preferred result when the amount of the filler is from 1 to 200 parts by weight per 100 parts by weight of the reactive silicon group-containing organic polymer (A). In the case where it is desired for the cured product to have low strength and high elongation at break, the use of a filler selected mainly from titanium oxide, calcium carbonate, magnesium carbonate, talc, ferric oxide, zinc oxide, and Shirasu balloons can provide a preferred result when the amount of the filler is from 5 to 200 parts by weight per 100 parts by weight of the reactive silicon group-containing organic polymer (A).

In general, the improving effect of calcium carbonate on the tensile strength at break, elongation at break, and adhesion of the cured product becomes greater with increasing specific surface area of the calcium carbonate. It should be appreciated that one filler may be used alone or two or more fillers may be used as a mixture. A combination of different types of calcium carbonate having a particle size of 1 µm or more may be used; for example, colloidal calcium carbonate surface-treated with a fatty acid and non-surface-treated ground calcium carbonate can be used in combination.

Hollow spheres such as balloons can be added to the curable composition in order to reduce the weight (or reduce the specific gravity) of the composition.

Balloons are a spherical filler and hollow. Examples of the material of the balloons include inorganic materials such as glass, Shirasu, and silica and organic materials such as phenol resin, urea resin, polystyrene, saran, and acrylonitrile. The material is not limited to those mentioned; an inorganic material and an organic material may be combined, or layers of different materials may be formed one around the other. Balloons made of an inorganic material, an organic material, or a combination of inorganic and organic materials, may be used. One type of balloons may be used, or two or more types of balloons made of different materials may be used as a mixture. The balloons used may have a processed or coated surface or may have a surface treated with any of various surface treatment agents. For example, organic balloons may be coated with calcium carbonate, talc, or titanium oxide, or inorganic balloons may be surface-treated with a silane coupling agent.

The particle size of the balloons used is preferably from 3 to 200 µm and particularly preferably from 10 to 110 µm. If the particle size is less than 3 µm, the balloons need to be added in large quantities since each of the balloons has a small effect on weight reduction. If the particle size is more than 200 µm, the cured product produced as a sealing material tends to have a surface with projections and depressions or have low elongation.

When balloons are used, an anti-slip agent as described in Japanese Laid-Open Patent Application Publication No. 2000-154368 can be added. An amine compound as described in Japanese Laid-Open Patent Application Publication No. 2001-164237, in particular a primary amine and/or secondary amine having a melting point of 35°C or higher, can also be added to allow the cured product to have a textured matte surface.

Specific examples of balloons are mentioned in publications such as Japanese Laid-Open Patent Application Publication No. H2-129262, Japanese Laid-Open Patent Application Publication No. H4-8788, Japanese Laid-Open Patent Application Publication No. H4-173867, Japanese Laid-Open Patent Application Publication No. H5-1225, Japanese Laid-Open Patent Application Publication No. H7-113073, Japanese Laid-Open Patent Application Publication No. H9-53063, Japanese Laid-Open Patent Application Publication No. H10-251618, Japanese Laid-Open Patent Application Publication No. 2000-154368, Japanese Laid-Open Patent Application Publication No. 2001-164237, and WO 97/05201.

The amount of hollow spheres used is preferably from 0.01 to 30 parts by weight per 100 parts by weight of the reactive silicon group-containing organic polymer (A). The amount of the hollow spheres is more preferably at least 0.1 parts by weight and at most 20 parts by weight. If the amount of the hollow spheres is less than 0.01 parts by weight, they fail to provide an improving effect on workability. If the amount of the hollow spheres is more than 30 parts by weight, the cured product tends to have low elongation and low tensile strength at break.

The curable composition may contain a property modifier added as necessary to adjust the tensile properties of the resulting cured product. Examples of the property modifier include, but are not limited to: alkylalkoxysilanes such as methyltrimethoxysilane, dimethyldimethoxysilane, trimethylmethoxysilane, and n-propyltrimethoxysilane; alkylisopropenoxysilanes such as dimethyldiisopropenoxysilane, methyltriisopropenoxysilane, and γ-glycidoxypropylmethyldiisopropenoxysilane; alkoxysilanes having a functional group, such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, *N-*β-aminoethyl-γ-aminopropylmethyldimethoxysilane, γ-mercaptopropyltrimethoxysilane, and γ-mercaptopropylmethyldimethoxysilane; silicone varnishes; and polysiloxanes. The use of the property modifier can increase the hardness of the cured product of the composition used in the present invention or conversely decrease the hardness and increase the elongation at break. One of the property modifiers as mentioned above may be used alone, or two or more thereof may be used in combination.

In particular, a compound hydrolyzable to form a compound having a monovalent silanol group in the molecule has the advantage of decreasing the modulus of the cured product without aggravating the stickiness of the surface of the cured product. Particularly preferred is a compound the hydrolysis of which gives trimethylsilanol. Examples of the compound hydrolyzable to form a compound having a monovalent silanol group in the molecule are compounds as mentioned in Japanese Laid-Open Patent Application Publication No. H5-117521. Other examples include: silicon compounds which are derivatives of alkyl alcohols such as hexanol, octanol, and decanol and which are hydrolyzable to form trialkyl silanols such as trimethylsilanol; and silicon compounds as mentioned in Japanese Laid-Open Patent Application Publication No. H11-241029, which are derivatives of polyhydric alcohols having three or more hydroxy groups, such as trimethylolpropane, glycerin, pentaerythritol, and sorbitol and which are hydrolyzable to form trialkyl silanols such as trimethylsilanol.

Still other examples include silicon compounds as mentioned in Japanese Laid-Open Patent Application Publication No. H7-258534, which are derivatives of oxyalkylene polymers and hydrolyzable to form trialkyl silanols such as trimethylsilanol. A polymer as mentioned in Japanese Laid-Open Patent Application Publication No. H6-279693, which has a hydrolyzable silicon-containing group capable of crosslinking and a silicon-containing group hydrolyzable to form a monosilanol-containing compound, can also be used.

The property modifier is preferably used in an amount of 0.1 to 20 parts by weight, more preferably in an amount of 0.5 to 10 parts by weight, per 100 parts by weight of the reactive silicon group-containing organic polymer (A).

The curable composition may contain an anti-sagging agent added as necessary to prevent sagging and improve workability. Examples of the anti-sagging agent include, but are not limited to, polyamide waxes, hydrogenated castor oil derivatives, and metallic soaps such as calcium stearate, aluminum stearate, and barium stearate. One of these anti-sagging agents may be used alone, or two or more thereof may be used in combination.

The anti-sagging agent is preferably used in an amount of 0.1 to 20 parts by weight per 100 parts by weight of the reactive silicon group-containing organic polymer (A).

An antioxidant (anti-aging agent) can be used in the curable composition. The use of the antioxidant can increase the weathering resistance of the cured product. Examples of the antioxidant include hindered phenol antioxidants, monophenol antioxidants, bisphenol antioxidants, and polyphenol antioxidants, and hindered phenol antioxidants are particularly preferred. Examples include: Irganox 245, Irganox 1010, Irganox 1035, Irganox 1076, Irganox 1135, Irganox 1330, and Irganox 1520 (all of which are manufactured by BASF); SONGNOX 1076 (manufactured by SONGWON); and BHT. The following hindered amine light stabilizers can also be used: Tinuvin 622LD, Tinuvin 144, Tinuvin 292, CHIMASSORB 944LD, and CHIMASSORB 119FL (all of which are manufactured by BASF); ADK STAB LA-57, ADK STAB LA-62, ADK STAB LA-67, ADK STAB LA-63, and ADK STAB LA-68 (all of which are manufactured by ADEKA Corporation); Sanol LS-2626, Sanol LS-1114, and Sanol LS-744 (all of which are manufactured by Sankyo Lifetech Co., Ltd.); and Nocrac CD (manufactured by Ouchi Shinko Chemical Industrial Co., Ltd.). Other antioxidants such as SONGNOX 4120, NAUGARD 445, and OKABEST CLX050 can also be used. Specific examples of antioxidants are mentioned also in Japanese Laid-Open Patent Application Publication No. H4-283259 or Japanese Laid-Open Patent Application Publication No. H9-194731.

The amount of the antioxidant used is preferably from 0.1 to 10 parts by weight and more preferably from 0.2 to 5 parts by weight per 100 parts by weight of the reactive silicon group-containing organic polymer (A).

A light stabilizer can be used in the curable composition. The use of the light stabilizer can prevent photooxidative degradation of the cured product. Examples of the light stabilizer include benzotriazole, hindered amine, and benzoate compounds. Particularly preferred are hindered amine compounds.

The amount of the light stabilizer used is preferably from 0.1 to 10 parts by weight and more preferably from 0.2 to 5 parts by weight per 100 parts by weight of the reactive silicon group-containing organic polymer (A). Specific examples of light stabilizers are mentioned in Japanese Laid-Open Patent Application Publication No. H9-194731.

In the case where a photocurable material is added to the curable composition, especially when the photocurable material is an unsaturated acrylic compound, it is preferable, as described in Japanese Laid-Open Patent Application Publication No. H5-70531, to use a hindered amine light stabilizer, in particular a tertiary amine-containing hindered amine light stabilizer, in order to improve the storage stability of the composition. Examples of the tertiary amine-containing hindered amine light stabilizer include: Tinuvin 123, Tinuvin 144, Tinuvin 249, Tinuvin 292, Tinuvin 312, Tinuvin 622LD, Tinuvin 765, Tinuvin 770, Tinuvin 880, Tinuvin 5866, Tinuvin B97, CHIMASSORB 119FL, and CHIMASSORB 944LD (all of which are manufactured by BASF); ADK STAB LA-57, LA-62, LA-63, LA-67, and LA-68 (all of which are manufactured by ADEKA Corporation); Sanol LS-292, LS-2626, LS-765, LS-744, and LS-1114 (all of which are manufactured by Sankyo Lifetech Co., Ltd.); SABOSTAB UV91, SABOSTAB UV119, SONGSORB CS5100, SONGSORB CS622, and SONGSORB CS944 (all of which are manufactured by SONGWON); and Nocrac CD (manufactured by Ouchi Shinko Chemical Industrial Co., Ltd.).

An ultraviolet absorber can be used in the curable composition. The use of the ultraviolet absorber can increase the surface weathering resistance of the cured product. Examples of the ultraviolet absorber include benzophenone, benzotriazole, salicylate, triazine, substituted tolyl, and metal chelate compounds. Particularly preferred are benzotriazole compounds. Examples include: Tinuvin 234, Tinuvin 326, Tinuvin 327, Tinuvin 328, Tinuvin 329, Tinuvin 350, Tinuvin 571, Tinuvin 900, Tinuvin 928, Tinuvin 1130, and Tinuvin 1600 (all of which are manufactured by BASF); and SONGSORB 3290 (manufactured by SONGWON). Examples of triazine compounds include: Tinuvin 400, Tinuvin 405, Tinuvin 477, and Tinuvin 1577ED (all of which are manufactured by BASF); and SONGSORB CS400 and SONGSORB 1577 (manufactured by SONGWON). Examples of benzophenone compounds include SONGSORB 8100 (manufactured by SONGWON).

The amount of the ultraviolet absorber used is preferably from 0.1 to 10 parts by weight and more preferably from 0.2 to 5 parts by weight per 100 parts by weight of the reactive silicon group-containing organic polymer (A). It is preferable to use a phenol or hindered phenol antioxidant, a hindered amine light stabilizer, and a benzotriazole ultraviolet absorber in combination.

Addworks IBC 760 (manufactured by Clariant) can also be used which is a product combining an antioxidant, a light stabilizer, and an ultraviolet absorber.

The curable composition may contain various additives added as necessary to adjust the physical properties of the curable composition or cured product. Examples of the additives include a flame retardant, a curability modifier, a radical inhibitor, a metal deactivator, an antiozonant, a phosphorus-based peroxide decomposer, a lubricant, a pigment, a blowing agent, a solvent, and a fungicide. Examples of the flame retardant include aluminum hydroxide and magnesium hydroxide. Each of the additives may be one type of material or a combination of two or more types of materials. Specific examples of additives other than those mentioned herein are mentioned in publications such as Japanese Examined Patent Application Publication No. H4-69659, Japanese Examined Patent Application Publication No. H7-108928, Japanese Laid-Open Patent Application Publication No. S63-254149, Japanese Laid-Open Patent Application Publication No. S64-22904, and Japanese Laid-Open Patent Application Publication No. 2001-72854.

The curable composition according to the present disclosure can be prepared as a one-part composition all the components of which are blended together and hermetically stored and which, when applied to any object, cures under the action of moisture in the air. The curable composition can be prepared also as a two-part composition consisting of a base material which contains the organic polymer (A) and a curing agent blend which is prepared separately from the base material by blending components such as a curing catalyst, a filler, a plasticizer, and water. In the case of this two-part composition, the base material and the curing agent blend are mixed before use.

In the case where the curable composition is a one-part composition, all the components are blended together beforehand. Thus, it is preferable that a water-containing component be dried to remove water before use or dehydrated by means such as pressure reduction during blending or kneading. In the case where the curable composition is a two-part composition, there is no need to add any curing catalyst to the base material containing the reactive silicon group-containing organic polymer (A), and the composition has a low risk of gelation even if the curing agent blend contains some amount of water; however, the water-containing component is preferably dried or dehydrated when the composition needs to have long-term storage stability. A suitable drying/dehydrating method used when the water-containing component is a solid such as powder is thermal drying, and a suitable drying/dehydrating method used when the water-containing component is a liquid is dehydration under reduced pressure or dehydration using synthetic zeolite, activated alumina, or silica gel. Alternatively, a small amount of isocyanate compound may be added to react the isocyanate group with water and thus accomplish dehydration. The storage stability of the curable composition can be further improved by not only performing the drying/dehydration as described above but also adding a lower alcohol such as methanol or ethanol or an alkoxysilane compound such as methyltrimethoxysilane, *n*-propyltrimethoxysilane, vinyltrimethoxysilane, vinylmethyldimethoxysilane, phenyltrimethoxysilane, γ-mercaptopropylmethyldimethoxysilane, γ-mercaptopropylmethyldiethoxysilane, or γ-glycidoxypropyltrimethoxysilane. A partially-condensed silane compound such as Dynasylan 6490 of Evonik is suitable for use as a dehydrating agent in terms of safety and stability.

The amount of the dehydrating agent used, in particular a silicon compound such as vinyltrimethoxysilane which is reactive with water, is preferably from 0.1 to 20 parts by weight and more preferably from 0.5 to 10 parts by weight per 100 parts by weight of the reactive silicon group-containing organic polymer (A).

The curable composition can be used as a material for architectural sealing materials, industrial adhesives, waterproof coatings, and pressure-sensitive adhesives. The curable composition can be used also as a sealing agent for buildings, ships, automobiles, and roads. The curable composition can, alone or with the help of a primer, adhere to a wide variety of substrates such as glass, porcelain, wood, metal, and a resin molded article, and thus can be used as any of various types of sealing compositions and adhesive compositions. The curable composition can be used not only as a common adhesive but also as a contact adhesive. In addition, the curable composition is useful as a food packaging material, a casting rubber material, a mold making material, or a paint. The low water absorbency, which is one of the characteristics of the present invention, is beneficial especially when the curable composition is used as a waterproof material such as a sealing material, a waterproof adhesive, or a waterproof coating.

The present invention is not limited to the embodiments described above and can be modified in various ways without departing from the scope as defined by the appended claims. The technical scope of the present invention encompasses embodiments obtained by combining technical means disclosed in the different embodiments.

In the following items, preferred aspects of the present disclosure are listed. The present invention is not limited to the following items.
<1> A curable composition containing:
   an organic polymer (A) containing a reactive silicon group represented by the following formula (1):
      -SiR¹₃₋ₐXₐ (1), wherein R¹ is a substituted or unsubstituted hydrocarbon group having 1 to 20 carbon atoms or a triorganosiloxy group represented by R⁰₃SiO- wherein the three R⁰ groups are each a hydrocarbon group having 1 to 20 carbon atoms and may be the same or different, X is a hydroxy group or a hydrolyzable group, a is 1, 2, or 3, and when there are a plurality of R¹ or X groups, the R¹ or X groups may be the same or different; and
   a curing catalyst (B) containing the following components (b1), (b2), and (b3):
      (b1) an organic carboxylic acid;
      (b2) an organic amine compound; and
      (b3) a metal compound represented by the following formula (2):
         M(OR²)_{d}Y_{e-d} (2), wherein M is a metal atom having a valence e and selected from titanium metal, aluminum metal, zirconium metal, and hafnium metal, e is the valence of the central metal, R² is a substituted or unsubstituted hydrocarbon group having 1 to 20 carbon atoms, Y is a chelate coordination compound, and d is 0 or an integer from 1 to e.
<2> The curable composition according to <1>, wherein the number of the reactive silicon groups in the organic polymer (A) is 0.7 or more on average per polymer chain end.
<3> The curable composition according to <2>, wherein the number of the reactive silicon groups in the organic polymer (A) is 0.8 or more on average per polymer chain end.
<4> The curable composition according to any one of <1> to <3>, wherein the reactive silicon group of the organic polymer (A) is a trimethoxysilyl group.
<5> The curable composition according to any one of <1> to <4>, wherein the organic polymer (A) has a main chain structure including a polyoxyalkylene, a saturated hydrocarbon polymer, or a (meth)acrylic ester polymer.
<6> The curable composition according to <5>, wherein the main chain structure of the organic polymer (A) is a polyoxyalkylene.
<7> The curable composition according to <5>, wherein the organic polymer (A) includes an organic polymer (A) whose main chain structure is a polyoxyalkylene and an organic polymer (A) whose main chain structure is a methacrylic ester polymer.
<8> The curable composition according to any one of <1> to <7>, wherein the organic polymer (A) is a polymer having a main chain having a branched structure.
<9> The curable composition according to any one of <1> to <8>, wherein the curing catalyst (B) contains a reaction product of part or all of the components (b1), (b2), and (b3).
<10> The curable composition according to any one of <1> to <8>, wherein the curing catalyst (B) is a mixture of the components (b1), (b2), and (b3).
<11> The curable composition according to any one of <1> to <10>, wherein the component (b3) of the curing catalyst (B) is an aluminum compound.
<12> The curable composition according to any one of <1> to <10>, wherein the component (b3) of the curing catalyst (B) is a titanium compound.
<13> The curable composition according to <12>, wherein an amount of the titanium compound is 0.1 parts by weight or less per 100 parts by weight of the organic polymer (A).
<14> The curable composition according to any one of <1> to <13>, further containing a silane coupling agent (C).
<15> The curable composition according to <14>, wherein the silane coupling agent (C) is a silane coupling agent resulting from partial condensation of reactive silicon groups.
<16> The curable composition according to any one of <1> to <15>, further containing a non-phthalic ester plasticizer (D) as a plasticizer.
<17> The curable composition according to <16>, wherein the non-phthalic ester plasticizer (D) is an aliphatic carboxylic ester.
<18> A cured product obtained by curing the curable composition according to any one of <1> to <17>.
<19> A waterproof material containing the curable composition according to any one of <1> to <17> or the cured product according to <18>.
<20> A method for producing the curable composition according to any one of <1> to <17>, the method including:
   adding the components (b1) to (b3) to the organic polymer (A) without reacting the organic carboxylic acid (b1) and the metal compound (b3) beforehand.

### Examples

Hereinafter, the present invention will be described in more detail using concrete examples. The present invention is not limited to the examples given below.

### (Catalyst Synthesis Example 1) Catalyst Reaction Product

A glass flask placed under a nitrogen atmosphere and equipped with a reflux tube was charged with 10 g of aluminum triisopropoxide, which was stirred. To the aluminum triisopropoxide under stirring was slowly added dropwise 25 g of neodecanoic acid. An oil bath was heated to increase the temperature inside the flask to 100°C, and the contents of the flask were stirred for 30 minutes. A cooled reaction product B-1 was obtained.

### (Synthesis Example 1)

Propylene oxide was polymerized using polyoxypropylene diol having a molecular weight of about 2,000 as an initiator in the presence of a zinc hexacyanocobaltate-glyme complex catalyst. This polymerization yielded hydroxy-terminated polypropylene oxide having a number-average molecular weight of 28,500 (polystyrene-equivalent molecular weight measured using HLC-8120 GPC of Tosoh Corporation as a delivery system, TSK-GEL H Type of Tosoh Corporation as a column, and THF as a solvent). Subsequently, NaOMe dissolved in methanol was added in an amount of 1.2 molar equivalents per molar equivalent of the hydroxy groups of the hydroxy-terminated polypropylene oxide, and then methanol was distilled off. Allyl chloride was further added to convert the terminal hydroxy groups to allyl groups. Allyl chloride remaining unreacted was removed by evaporation under reduced pressure. To 100 parts by weight of the unpurified allyl-terminated polypropylene oxide were added 300 parts by weight of n-hexane and 300 parts by weight of water, and the mixture was stirred and then centrifuged to remove water. To the resulting hexane solution was added 300 parts by weight of water, and the mixture was stirred and then centrifuged to remove water. Hexane was subsequently removed by evaporation under reduced pressure. Thus, difunctional polypropylene oxide terminated by allyl groups and having a number-average molecular weight of about 28,500 was obtained. To 100 parts by weight of the allyl-terminated polypropylene oxide was added 150 ppm of a 2-propanol solution containing a platinum-vinylsiloxane complex as a catalyst and having a platinum content of 3 wt%, and trimethoxysilane was added in an amount of 0.8 molar equivalents per molar equivalent of the allyl groups of the allyl-terminated polypropylene oxide and reacted with the allyl groups at 90°C for 5 hours to obtain a trimethoxysilyl-terminated polyoxypropylene polymer (A-1). ¹H-NMR measurement (measurement performed in a CDCl₃ solvent using AVANCE III HD500 of Bruker) revealed that the number of trimethoxysilyl groups was about 0.7 per polymer chain end.

### (Synthesis Example 2)

Propylene oxide was polymerized using a 1/1 (weight ratio) mixture of polyoxypropylene diol having a molecular weight of about 2,000 and polyoxypropylene triol having a molecular weight of about 3,000 as an initiator in the presence of a zinc hexacyanocobaltate-glyme complex catalyst. This polymerization yielded hydroxy-terminated polypropylene oxide having a number-average molecular weight of about 19,000 (polystyrene-equivalent molecular weight measured using HLC-8420 GPC of Tosoh Corporation as a delivery system, TSK-GEL H Type of Tosoh Corporation as a column, and THF as a solvent). Conversion of the hydroxy groups of the hydroxy-terminated polypropylene to allyl groups and the subsequent purification were carried out in the same manner as in Synthesis Example 1, and thus allyl-terminated polypropylene oxide (hereinafter also referred to as "allyl polymer") was obtained. To 100 parts by weight of the allyl polymer was added 150 ppm of an isopropanol solution containing a platinum-vinylsiloxane complex as a catalyst and having a platinum content of 3 wt%, and methyldimethoxysilane was added in an amount of 0.7 molar equivalents per molar equivalent of the allyl groups of the allyl-terminated polypropylene oxide and reacted with the allyl groups at 90°C for 2 hours to obtain methyldimethoxysilyl-terminated polypropylene oxide (A-2). ¹H-NMR measurement (measurement performed in a CDCl₃ solvent using AVANCE III HD500 of Bruker) revealed that the number of methyldimethoxysilyl groups was about 0.7 per polymer chain end. The main chain structure of the polymer (A-2) includes both a linear structure and a branched structure.

### (Synthesis Example 3)

Trimethoxysilyl-terminated polypropylene oxide (A-3) was obtained through procedures identical to those in Synthesis Example 1, except that trimethoxysilane was reacted in an amount of 0.7 molar equivalents per molar equivalent of allyl groups. The number of trimethoxysilyl groups was about 0.6 per polymer chain end.

### (Synthesis Example 4)

Methyldimethoxysilyl-terminated polypropylene oxide (A-4) was obtained through procedures identical to those in Synthesis Example 1, except that instead of trimethoxysilane, methyldimethoxysilane was reacted in an amount of 0.8 molar equivalents per molar equivalent of allyl groups. The number of methyldimethoxysilyl groups was about 0.7 per polymer chain end.

### (Synthesis Example 5)

Propylene oxide was polymerized using polyoxypropylene diol having a molecular weight of about 2,000 as an initiator in the presence of a zinc hexacyanocobaltate-glyme complex catalyst. This polymerization yielded polypropylene oxide having a number-average molecular weight of about 16,000. Subsequently, NaOMe dissolved in methanol was added in an amount of 1.2 molar equivalents per molar equivalent of the hydroxy groups of the hydroxy-terminated polypropylene oxide, and then methanol was distilled off. Allyl chloride was further added to convert the terminal hydroxy groups to allyl groups. Thus, an allyl polymer terminated by allyl groups and having a number-average molecular weight of about 16,000 was obtained.

The allyl polymer was purified through procedures identical to those in Synthesis Example 1. To 100 parts by weight of the allyl polymer was added 150 ppm of an isopropanol solution containing a platinum-vinylsiloxane complex as a catalyst and having a platinum content of 3 wt%, and methyldimethoxysilane was added in an amount of 0.7 molar equivalents per molar equivalent of the allyl groups of the allyl-terminated polypropylene oxide and reacted with the allyl groups at 90°C for 2 hours to obtain methyldimethoxysilyl-terminated polypropylene oxide (A-5). The number of methyldimethoxysilyl groups was about 0.6 per polymer chain end.

### (Synthesis Example 6)

Propylene oxide was polymerized using polyoxypropylene diol having a molecular weight of about 2,000 as an initiator in the presence of a zinc hexacyanocobaltate-glyme complex catalyst. This polymerization yielded polypropylene oxide having a number-average molecular weight of about 14,500. Subsequently, NaOMe dissolved in methanol was added in an amount of 1.2 molar equivalents per molar equivalent of the hydroxy groups of the hydroxy-terminated polypropylene oxide, and then methanol was distilled off. Allyl chloride was further added to convert the terminal hydroxy groups to allyl groups. Thus, an allyl polymer terminated by allyl groups and having a number-average molecular weight of about 14,500 was obtained.

The allyl polymer was purified through procedures identical to those in Synthesis Example 1. To 100 parts by weight of the allyl polymer was added 150 ppm of an isopropanol solution containing a platinum-vinylsiloxane complex as a catalyst and having a platinum content of 3 wt%, and trimethoxysilane was added in an amount of 0.8 molar equivalents per molar equivalent of the allyl groups of the allyl-terminated polypropylene oxide and reacted with the allyl groups at 90°C for 5 hours to obtain trimethoxysilyl-terminated polypropylene oxide (A-6). The number of trimethoxysilyl groups was about 0.7 per polymer chain end.

### (Synthesis Example 7)

Propylene oxide was polymerized using polyoxypropylene diol having a molecular weight of about 2,000 as an initiator in the presence of a zinc hexacyanocobaltate-glyme complex catalyst. This polymerization yielded polypropylene oxide having a number-average molecular weight of about 28,500. Subsequently, NaOMe dissolved in methanol was added in an amount of 1.0 molar equivalents per molar equivalent of the hydroxy groups of the hydroxy-terminated polypropylene oxide, and then methanol was distilled off at 140°C. After that, 1.0 equivalents of allyl glycidyl ether was added and reacted with the hydroxy-terminated polypropylene oxide for 2 hours. Allyl chloride was further added to convert the terminal hydroxy groups to allyl groups. Thus, an allyl polymer having a plurality of allyl groups at each polymer chain end and having a number-average molecular weight of about 28,500 was obtained.

The allyl polymer was purified through procedures identical to those in Synthesis Example 1. To 100 parts by weight of the allyl polymer was added 150 ppm of an isopropanol solution containing a platinum-vinylsiloxane complex as a catalyst and having a platinum content of 3 wt%, and methyldimethoxysilane was added in an amount of 0.8 molar equivalents per molar equivalent of all the allyl groups contained in the allyl polymer and reacted with the allyl groups at 90°C for 5 hours to obtain methyldimethoxysilyl-terminated polypropylene oxide (A-7). The number of methyldimethoxysilyl groups was about 1.5 per polymer chain end.

### (Synthesis Example 8)

Trimethoxysilyl-terminated polypropylene oxide (A-8) was obtained through procedures identical to those in Synthesis Example 7, except that trimethoxysilane was used instead of methyldimethoxysilane. The number of trimethoxysilyl groups was about 1.5 per polymer chain end.

### (Synthesis Example 9)

Propylene oxide was polymerized using polyoxypropylene triol having a molecular weight of about 3,000 as an initiator in the presence of a zinc hexacyanocobaltate-glyme complex catalyst. This polymerization yielded polypropylene oxide whose main chain had a branched structure and which had a number-average molecular weight of about 16,500. After that, conversion of the terminal hydroxy groups to allyl groups and the subsequent purification were carried out in the same manner as in Synthesis Example 1 to obtain a purified allyl polymer. Methyldimethoxysilane was added in an amount of 0.8 molar equivalents per molar equivalent of the allyl groups and reacted with the allyl groups to obtain methyldimethoxysilyl-terminated polypropylene oxide (A-9). The number of methyldimethoxysilyl groups was about 0.7 per polymer chain end.

### (Synthesis Example 10)

Propylene oxide was polymerized using polyoxypropylene triol having a molecular weight of about 3,000 as an initiator in the presence of a zinc hexacyanocobaltate-glyme complex catalyst. This polymerization yielded polypropylene oxide whose main chain had a branched structure and which had a number-average molecular weight of about 25,000. After that, conversion of the terminal hydroxy groups to allyl groups and the subsequent purification were carried out in the same manner as in Synthesis Example 1 to obtain a purified allyl polymer. Methyldimethoxysilane was added in an amount of 0.8 molar equivalents per molar equivalent of the allyl groups and reacted with the allyl groups to obtain methyldimethoxysilyl-terminated polypropylene oxide (A-10). The number of methyldimethoxysilyl groups was about 0.7 per polymer chain end.

### (Synthesis Example 11)

A polypropylene oxide allyl polymer whose main chain had a branched structure and which had a number-average molecular weight of about 16,500 was obtained in the same manner as in Synthesis Example 9. Trimethoxysilane was added in an amount of 0.8 molar equivalents per molar equivalent of the allyl groups and reacted with the allyl groups to obtain trimethoxysilyl-terminated polypropylene oxide (A-11). The number of trimethoxysilyl groups was about 0.7 per polymer chain end.

### (Synthesis Example 12)

An isobutyl alcohol solution of a monomer mixture composed as shown below was heated to 105°C, and a solution of 2.4 parts by weight of 2,2'-azobis(2-methylbutyronitrile) serving as a polymerization initiator was added dropwise to the heated isobutyl alcohol solution over 5 hours, after which the solution mixture was heated at 105°C for 1 hour to obtain a (meth)acrylic ester copolymer (a-1).

Composition of monomer mixture: methyl methacrylate (47 parts by weight), butyl acrylate (29 parts by weight), stearyl methacrylate (20 parts by weight), γ-methacryloxypropyldimethoxymethylsilane (5 parts by weight)

The polymer (A-2) obtained in Synthesis Example 2 and the polymer (a-1) were mixed at a solids weight ratio of 80/20, and then the solvent was distilled off to obtain a polymer (A-12).

### (Synthesis Example 13)

A 2-butanol solution of a monomer mixture composed as shown below was heated to 105°C, and a solution of 1.8 parts by weight of 2,2'-azobis(2-methylbutyronitrile) serving as a polymerization initiator was added dropwise to the heated 2-butanol solution over 5 hours, after which the solution mixture was subjected to "postpolymerization" for 1 hour to obtain a (meth)acrylic ester copolymer (a-2).

Composition of monomer mixture: methyl methacrylate (65 parts by weight), 2-ethylhexyl acrylate (25 parts by weight), γ-methacryloxypropyltrimethoxysilane (10 parts by weight), 3-mercaptopropyltrimethoxysilane (7 parts by weight).

The polymer (A-3) obtained in Synthesis Example 3 and the polymer (a-2) were mixed at a solids weight ratio of 70/30, and then the solvent was distilled off to obtain a polymer (A-13).

### (Synthesis Example 14)

The polymer (A-8) obtained in Synthesis Example 8 and the polymer (a-2) obtained in Synthesis Example 13 were mixed at a solids weight ratio of 60/40, and then the solvent was distilled off to obtain a polymer (A-14).

### (Synthesis Example 15)

Butyl acrylate (69.9 parts by weight), ethyl acrylate (10.6 parts by weight), and stearyl acrylate (18.6 parts by weight) were polymerized in an acetonitrile solvent at about 80 to 90°C using diethyl 2,5-dibromoadipate (1.06 parts by weight) as an initiator, cuprous bromide (0.76 parts by weight) as a catalyst, and pentamethyldiethylenetriamine as a catalyst ligand. This polymerization yielded a polyacrylic ester terminated at both ends by bromine groups. The polymerization reaction rate was controlled as appropriate by the amount of pentamethyldiethylenetriamine. Subsequently, the terminal bromine groups of the polymer and 1,7-octadiene were reacted in an acetonitrile solvent using a cuprous bromide-pentamethyldiethylenetriamine complex as a catalyst. The amount of 1,7-octadiene was 60 molar equivalents per molar equivalent of the terminal bromine groups. After the reaction, 1,7-octadiene remaining unreacted was removed by evaporation. The polymer thus obtained was purified by adsorption, and the purified polymer was heated to about 190°C and subjected to a debromination reaction. The resulting polymer was purified again by adsorption to obtain a polyacrylic ester terminated at both ends by alkenyl groups.

To the polyacrylic ester terminated at both ends by alkenyl groups was added 300 ppm of an isopropanol solution containing a platinum-vinylsiloxane complex as a catalyst and having a platinum content of 3 wt%, and methyldimethoxysilane was reacted with the alkenyl groups of the polyacrylic ester at 100°C for 1 hour. The reaction was carried out in the presence of methyl orthoformate, and the amount of methyldimethoxysilane was 4 molar equivalents. After the reaction, methyldimethoxysilane and methyl orthoformate remaining unreacted were removed by evaporation to obtain methyldimethoxysilyl-terminated polyacrylic ester (A-15). The obtained polymer had a number-average molecular weight of 40,500 and a dispersity of 1.3, and the number of methyldimethoxysilyl groups was about 1.0 per polymer chain end.

### (Synthesis Example 16)

Propylene oxide was polymerized using polyoxypropylene glycol having a molecular weight of about 4,500 as an initiator in the presence of a zinc hexacyanocobaltate-glyme complex catalyst. This polymerization yielded polyoxypropylene terminated at both ends by hydroxy groups and having a number-average molecular weight of 27,900.

To 100 parts by weight of the obtained polymer was added 30 ppm of a 2-ethylhexanoic acid solution of bismuth(III) 2-ethylhexanoate (Bi: 25%), and (3-isocyanatopropyl)trimethoxysilane was added in an amount of 0.95 molar equivalents per molar equivalent of the hydroxy groups of the polymer to induce a urethanization reaction of the hydroxy groups of the polymer. As a result, silyl group-containing linear polyoxypropylene (A-16) having no branch was obtained.

### (Synthesis Example 17)

Butyl acrylate (98.3 parts by weight) was polymerized in an acetonitrile solvent at about 80 to 90°C using diethyl 2,5-dibromoadipate (1.7 parts by weight) as an initiator, cuprous bromide (0.82 parts by weight) as a catalyst, and pentamethyldiethylenetriamine as a catalyst ligand. This polymerization yielded a polyacrylic ester terminated at both ends by bromine groups. The polymerization reaction rate was controlled as appropriate by the amount of pentamethyldiethylenetriamine. Subsequently, the terminal bromine groups of the polymer and 1,7-octadiene were reacted in an acetonitrile solvent using a cuprous bromide-pentamethyldiethylenetriamine complex as a catalyst to obtain a polyacrylic ester. The amount of 1,7-octadiene was 40 molar equivalents per molar equivalent of the initiator. After the reaction, 1,7-octadiene remaining unreacted was removed by evaporation. The polymer thus obtained was purified using an adsorbent, and the purified polymer was heated to about 190°C and subjected to a debromination reaction. The resulting polymer was purified again using an adsorbent to obtain a polyacrylic ester terminated at both ends by alkenyl groups.

To the polyacrylic ester terminated at both ends by alkenyl groups was added 300 ppm of an isopropanol solution containing a platinum-vinylsiloxane complex as a catalyst and having a platinum content of 3 wt%, and the alkenyl groups of the polyacrylic ester were subjected to a hydrosilylation reaction with methyldimethoxysilane. The reaction temperature was 100°C and the reaction time was 1 hour. The reaction was carried out in the presence of methyl orthoformate, and the amount of methyldimethoxysilane was 2 molar equivalents per molar equivalent of the alkenyl groups. After the reaction, methyldimethoxysilane and methyl orthoformate remaining unreacted were removed by evaporation to obtain methyldimethoxysilyl-terminated polyacrylic ester (A-17). The obtained polymer had a number-average molecular weight of 25,000 and a dispersity of 1.3, and the number of methyldimethoxysilyl groups was about 1.0 per polymer chain end.

### (Evaluations)

Curable composition base materials each containing a reactive silicon group-containing organic polymer as a resin component were prepared using components in the proportions indicated in Table 1. The polymer (A), a plasticizer, calcium carbonate, a pigment, a thixotropic agent, a light stabilizer, and an ultraviolet absorber were weighed into a plastic container in the proportions indicated in Table 1, and the contents of the container were mixed and stirred by means of Awatori Rentaro to disperse the components uniformly.

**[Table 1]**

| Component proportions of base material (parts by weight) | | Base material 1 | Base material 2 |
|---|---|---|---|
| Organic polymer (A) | Polymer (A-1) | 100 | |
| | Polymer (A-2) | | 100 |
| Plasticizer | DINP⁽¹⁾ | 90 | 90 |
| Calcium carbonate | Hakuenka CCR⁽²⁾ | 160 | 160 |
| | Whiton SB⁽³⁾ | 54 | 54 |
| Pigment | Ti-Pure R902+⁽⁴⁾ | 20 | 20 |
| Thixotropic agent | Crayvallac SLT⁽⁵⁾ | 2 | 2 |
| Light stabilizer | Tinuvin 770⁽⁶⁾ | 1 | 1 |
| Ultraviolet absorber | Tinuvin 328⁽⁶⁾ | 1 | 1 |

| | | | |
|---|---|---|---|
| [0154] (1) Diisononyl phthalate (2) Manufactured by Shiraishi Kogyo Kaisha, Ltd. (3) Manufactured by Shiraishi Calcium Kaisha, Ltd. (4) Manufactured by Dupont (5) Manufactured by ARKEMA (6) Manufactured by BASF | | | |

### (Skinning Time (Curability))

In an atmosphere with a temperature of 23°C and a relative humidity of 50%, the base material was weighed into a plastic container, into which vinyltrimethoxysilane (Dynasylan VTMO, manufactured by Evonik), *N*-(2-aminoethyl)-3-aminopropyltrimethoxysilane (trade name: Dynasylan DAMO, manufactured by Evonik), and a curing catalyst were added in the proportions indicated in the table below. The contents of the container were then thoroughly mixed by means of Awatori Rentaro. An about 5-mm-thick mold was filled with the mixture by means of a spatula, and the surface of the mixture was flattened. The moment at which the surface flattening was completed was defined as a curing start time. The time taken for the mixture to become non-sticky to the spatula touching the surface of the mixture was determined as the skinning time. In this manner, the curing time (curability) was measured.

### (Water Absorption Rate)

A 2-mm-thick mold was filled with a mixture obtained in the manner as described in "Evaluations" above and was allowed to stand in an atmosphere with a temperature of 23°C and a relative humidity of 50% for 3 days and then in a dryer set to 60°C for 2 days, and thus a cured product was obtained. The 2-mm-thick cured product was cut into a 20 mm by 20 mm square piece, which was used as a test specimen. The weight of the test specimen was measured, and then the test specimen was immersed in 60°C hot water. After 5 days, the test specimen was taken out and wiped with a paper towel to remove water, and then immediately the weight of the test specimen was measured. The weight change resulting from the immersion was determined in % as the water absorption rate. The water absorption rate measurement was conducted three times, and the average of the three measured values is shown in the table.

### (Examples 1 and 2 and Comparative Example 1)

The base material 1 was used and mixed with a silane coupling agent and a curing catalyst in the proportions indicated in Table 2. The mixtures were measured for the curability and the water absorption rate. In the table, "Al(O*ⁱ*Pr)₃" represents triisopropoxyaluminum. The results are shown in Table 2.

**[Table 2]**

| Component proportions (parts by weight) | | Ex. | | Comp. |
|---|---|---|---|---|
| | | 1 | 2 | 1 |
| Base material | Base material 1 | 428 | 428 | 428 |
| Silane coupling agent (C) | VTMO | 5 | 5 | 5 |
| | DAMO | 3 | 3 | 3 |
| Curing catalyst (B) | B-1 | 4.6 | | |
| (b1) | Neodecanoic acid | | 3.3 | 3.3 |
| (b2) | DMAPA⁽⁷⁾ | 0.5 | 0.5 | 0.5 |
| (b3) | Al(O*ⁱ*Pr)₃ | | 1.3 | |
| Curability | Skinning time | 28 min | 27 min | 35 min |
| Water absorption rate | After 5-day immersion at 60°C | | 1.7% | 2.6% |

### (7) 3-(N,N-Dimethylamino)propylamine

### (Results)

As seen from Table 2, the curable compositions of Examples 1 and 2, which contained the catalyst components (b1), (b2), and (b3), cured more rapidly and exhibited a lower water absorption rate than the curable composition of Comparative Example 1 which contained only the catalyst components (b2) and (b3).

### (Example 3 and Comparative Example 2)

The base material 2 was used and mixed with a silane coupling agent and a curing catalyst in the proportions indicated in Table 3. The mixtures were measured for the curability and the water absorption rate. The results are shown in Table 3.

**[Table 3]**

| Component proportions (parts by weight) | | Ex. | Comp. |
|---|---|---|---|
| | | 3 | 2 |
| Base material | Base material 2 | 428 | 428 |
| Silane coupling agent (C) | VTMO | 2 | 2 |
| | DAMO | 3 | 3 |
| Curing catalyst (B) | | | |
| (b1) | Neodecanoic acid | 3.3 | 3.3 |
| (b2) | DMAPA⁽⁷⁾ | 0.5 | 0.5 |
| (b3) | Al(O*ⁱ*Pr)₃ | 1.3 | |
| Curability | Skinning time | 120 min | 155 min |
| Water absorption rate | After 5-day immersion at 60°C | 1.8% | 2.9% |

As seen from Table 3, the curable composition of Example 3, which contained the catalyst components (b1), (b2), and (b3), cured more rapidly and exhibited a lower water absorption rate than the curable composition of Comparative Example 2 which contained only the catalyst components (b1) and (b2).

### (Examples 4 and 5 and Comparative Examples 3 and 4)

The base material 1 was used and mixed with a silane coupling agent and a curing catalyst in the proportions indicated in Table 4. The mixtures were measured for the curability and the water absorption rate. The results are shown in Table 4.

**[Table 4]**

| Component proportions (parts by weight) | | Ex. | Ex. | Comp. | Comp. |
|---|---|---|---|---|---|
| | | 4 | 5 | 3 | 4 |
| Base material | Base material 1 | 428 | 428 | 428 | 428 |
| Silane coupling agent (C) | VTMO | 5 | 5 | 5 | 5 |
| | DAMO | 3 | 3 | 3 | 3 |
| Curing catalyst (B) | | | | | |
| (b1) | Neodecanoic acid | 3.3 | 3.3 | 3.3 | |
| (b2) | Laurylamine | 1 | | | |
| | DMAPA⁽⁷⁾ | | 0.5 | 0.5 | 0.5 |
| (b3) | Al(O*ⁱ*Pr)₃ | 1.3 | | | 1.3 |
| | Al(acac)₃⁽⁸⁾ | | 2.1 | | |
| Aluminum compound other than (b3) | Al(OH)(2EHA)₂⁽⁹⁾ | | | 2.1 | |
| Curability | Skinning time | 34 min | 37 min | 40 min | 3 days |
| Water absorption rate | After 5-day immersion at 60°C | 1.9% | 1.8% | 3.3% | 2.3% |

### (8) Aluminum bisacetoacetate

### (9) Bis(2-ethylhexanoato)hydroxyaluminum

As seen from Table 4, the curable compositions of Examples 4 and 5, which contained the catalyst components (b1), (b2), and (b3), cured more rapidly and exhibited a lower water absorption rate than the curable composition of Comparative Example 3 which contained only the catalyst components (b1) and (b2) or the curable composition of Comparative Example 4 which contained only the catalyst components (b2) and (b3).

Curable composition base materials each containing a reactive silicon group-containing organic polymer as a resin component were prepared using components in the proportions indicated in Table 5. The polymer (A), a plasticizer, calcium carbonate, balloons, a pigment, a thixotropic agent, an antioxidant, a light stabilizer, and an ultraviolet absorber were weighed into a plastic container in the proportions indicated in Table 5, and the contents of the container were mixed and stirred by means of Awatori Rentaro to disperse the components uniformly. In the table, "Hexamoll DINCH" is 1,2-cyclohexanedicarboxylic acid diisononyl ester (manufactured by BASF).

**[Table 5]**

| Component proportions of base material (parts by weight) | | Base material 3 | Base material 4 | Base material 5 | Base material 6 | Base material 7 | Base material 8 | Base material 9 | Base material 10 | Base material 11 | Base material 12 | Base material 13 | Base material 14 | Base material 15 |
|---|---|---|---|---|---|---|---|---|---|---|---|---|---|---|
| Organic polymer (A) | A-1 | 100 | | | | | | | | | | | | |
| | A-6 | | 100 | | | | | | | | | | | |
| | A-7 | | | 100 | | | | | | | | | | |
| | A-8 | | | | 100 | | | | | | | | | |
| | A-9 | | | | | 100 | | | | | | | | |
| | A-10 | | | | | | 100 | | | | | | | |
| | A-11 | | | | | | | 100 | | | | | | |
| | A-12 | | | | | | | | 100 | | | | | |
| | A-13 | | | | | | | | | 100 | | | | |
| | A-14 | | | | | | | | | | 100 | | | |
| | A-15 | | | | | | | | | | | 80 | | |
| | A-5 | | | | | | | | | | | | 100 | |
| | A-4 | | | | | | | | | | | 20 | | 100 |
| Plasticizer | Hexamoll DINCH⁽¹⁰⁾ | 120 | 120 | 120 | 120 | 120 | 120 | 120 | 120 | 120 | 120 | 120 | 120 | 120 |
| Calcium carbonate | Winnofil SPM⁽¹¹⁾ | 160 | 160 | 160 | 160 | 160 | 160 | 160 | 160 | 160 | 160 | 160 | 160 | 160 |
| | Imerseal 36S⁽¹¹⁾ | 54 | 54 | 54 | 54 | 54 | 54 | 54 | 54 | 54 | 54 | 54 | 54 | 54 |
| Balloons | MFL-81GCA⁽¹²⁾ | 5 | 5 | 5 | 5 | 5 | 5 | 5 | 5 | 5 | 5 | 5 | 5 | 5 |
| Pigment | RFK-2⁽¹³⁾ | 5 | 5 | 5 | 5 | 5 | 5 | 5 | 5 | 5 | 5 | 5 | 5 | 5 |
| Thixotropic agent | Crayvallac SLT | 5 | 5 | 5 | 5 | 5 | 5 | 5 | 5 | 5 | 5 | 5 | 5 | 5 |
| Antioxidant | Irganox 1010⁽¹⁰⁾ | 1 | 1 | 1 | 1 | 1 | 1 | 1 | 1 | 1 | 1 | 1 | 1 | 1 |
| Light stabilizer | Tinuvin 770 | 1 | 1 | 1 | 1 | 1 | 1 | 1 | 1 | 1 | 1 | 1 | 1 | 1 |
| Ultraviolet absorber | Tinuvin 326⁽¹⁰⁾ | 1 | 1 | 1 | 1 | 1 | 1 | 1 | 1 | 1 | 1 | 1 | 1 | 1 |

| | | | | | | | | | | | | | | |
|---|---|---|---|---|---|---|---|---|---|---|---|---|---|---|
| (10) Manufactured by BASF (11) Manufactured by Imery (12) Manufactured by Matsumoto Yushi-Seiyaku Co., Ltd. (13) Manufactured by Sachtleben | | | | | | | | | | | | | | |

### (Examples 5 to 16)

As shown in Table 6, the base materials prepared as above were used and mixed with a silane coupling agent and a curing catalyst in the proportions indicated in Table 6. The mixtures were measured for the curability and the water absorption rate. In the table, "AMMO" is 3-aminopropyltrimethoxysilane and "Al(O*^{s}*Bu)₃" represents tri-*sec*-butoxyaluminum. The results are shown in Table 6.

**[Table 6]**

| Component proportions (parts by weight) | | Ex. | | | | | | | | | | |
|---|---|---|---|---|---|---|---|---|---|---|---|---|
| | | 6 | 7 | 8 | 9 | 10 | 11 | 12 | 13 | 14 | 15 | 16 |
| Base material | | Base material 3 | Base material 4 | Base material 5 | Base material 6 | Base material 7 | Base material 8 | Base material 9 | Base material 10 | Base material 11 | Base material 12 | Base material 13 |
| | | 452 | 452 | 452 | 452 | 452 | 452 | 452 | 452 | 452 | 452 | 452 |
| Silane coupling agent (C) | VTMO | 5 | 5 | 2 | 5 | 2 | 2 | 5 | 2 | 5 | 5 | 5 |
| | AMMO | 3 | 3 | 3 | 3 | 3 | 3 | 3 | 3 | 3 | 3 | 3 |
| Curing catalyst (B) | | | | | | | | | | | | |
| (b1) | Neodecanoic acid | 3.3 | 3.3 | 3.3 | 3.3 | 3.3 | 3.3 | 3.3 | 3.3 | 3.3 | 3.3 | 3.3 |
| (b2) | DMAPA | 1 | 1 | 1 | 1 | 1 | 1 | 1 | 1 | 1 | 1 | 1 |
| (b3) | Al(O*^{s}* Bu)₃ | 1.6 | 1.6 | 1.6 | 1.6 | 1.6 | 1.6 | 1.6 | 1.6 | 1.6 | 1.6 | 1.6 |
| Curability | Skinning time | 100 min | 145 min | 165 min | 55 min | 130 min | 120 min | 110 min | 100 min | 95 min | 40 min | 180 min |
| Water absorption rate | After 5-day immersion at 60°C | 0.9% | 0.9% | 0.8% | 0.6% | 0.9% | 1.0% | 0.7% | 0.9% | 0.7% | 0.7% | 0.8% |

### (Examples 17 and 18)

As shown in Table 7, the base material 14 or 15 prepared as above was used and mixed with a silane coupling agent and a curing catalyst in the proportions indicated in Table 7. The mixtures were measured for the water absorption rate. The results are shown in Table 7.

**[Table 7]**

| Component proportions (parts by weight) | | Ex. | |
|---|---|---|---|
| | | 17 | 18 |
| Base material | | Base material 14 | Base material 15 |
| | | 452 | 452 |
| Silane coupling agent (C) | VTMO | 2 | 2 |
| | AMMO | 3 | 3 |
| Curing catalyst (B) | | | |
| (b1) | Neodecanoic acid | 3.3 | 3.3 |
| (b2) | DMAPA | 1 | 1 |
| (b3) | Al(O*^{s}*Bu)₃ | 1.6 | 1.6 |
| \| Water absorption rate | After 5-day immersion at 60°C | 1.2% | 0.9% |

### (Example 19 and Comparative Example 5)

Components were weighed in the proportions indicated in Table 8 and placed into and kneaded by a mixer to prepare a homogeneous mixture, which was then degassed under reduced pressure. The resulting mixture was hermetically sealed in a moisture-proof container, and thus a one-part curable composition was obtained. In Table 8, "TIB KAT223" is dioctylbis(pentane-2,4-dionato-O,O')tin.

The curable composition obtained as above was applied to two bond substrates made of beech. The bond surfaces were brought into close contact, and the substrates were fixed in a position where the thickness of the composition between the substrates was 1 mm. The test specimen thus prepared was allowed to stand at a constant temperature of 23°C and a constant humidity of 50%. After 4 hours, the test specimen was subjected to a shear tensile test using Autograph, and the shear strength of the test specimen was measured. The results are shown in Table 8.

**[Table 8]**

| Component proportions (parts by weight) | | Ex. 19 | Comp. 5 |
|---|---|---|---|
| Organic polymer (A) | A-1 | 100 | 100 |
| Plasticizer | Hexamoll DINCH⁽¹⁰⁾ | 120 | 120 |
| Calcium carbonate | Winnofil SPM⁽¹¹⁾ | 160 | 160 |
| | Imerseal 36S⁽¹¹⁾ | 54 | 54 |
| Balloons | MFL-81GCA⁽¹²⁾ | 5 | 5 |
| Pigment | RFK-2⁽¹³⁾ | 5 | 5 |
| Thixotropic agent | Crayvallac SLT | 5 | 5 |
| Antioxidant | Irganox 1010⁽¹⁰⁾ | 1 | 1 |
| Light stabilizer | Tinuvin 770 | 1 | 1 |
| Ultraviolet absorber | Tinuvin 326 ⁽¹⁰⁾ | 1 | 1 |
| Silane coupling agent (C) | VTMO | 5 | 5 |
| | AMMO | 3 | 3 |
| Curing catalyst (B) | | | |
| (b1) | Neodecanoic acid | 3.3 | |
| (b2) | DMAPA | 1 | |
| (b3) | Al(O*^{s}*Bu)₃ | 1.6 | |
| Curing catalyst other than (B) | TIB KAT223 | | 0.2 |
| Early shear strength | After 4 hours | 0.54 MPa | 0.12 MPa |

As seen from Table 8, the curable composition of Example 19 exhibited a higher early shear strength than the composition of Comparative Example 5 which did not contain the curing catalyst (B).

### (Examples 20 to 22)

As shown in Table 9, the base material 3 prepared as above was used and mixed with a silane coupling agent and a curing catalyst in the proportions indicated in Table 9. The mixtures were measured for the water absorption rate. In the table, "Dynasylan 6490" is a polyvinylsiloxane oligomer obtained from vinyltrimethoxysilane (manufactured by Evonik), "Dynasylan 1146" is a diaminosilane-containing silane oligomer (manufactured by Evonik), and "Silquest A-187" is 3-glycidoxypropyltrimethoxysilane (manufactured by Momentive). The results are shown in Table 9.

**[Table 9]**

| Component proportions (parts by weight) | | Ex. | | |
|---|---|---|---|---|
| | | 20 | 21 | 22 |
| Base material | | Base material 3 | Base material 3 | Base material 3 |
| | | 452 | 452 | 452 |
| Silane coupling agent (C) | VTMO | 1 | | 5 |
| | AMMO | 3 | 3 | 1 |
| | Dynasylan 6490⁽¹⁴⁾ | | 5 | |
| | Dynasylan 1146⁽¹⁴⁾ | | | 1 |
| | Silquest A-187⁽¹⁵⁾ | | | 1 |
| Curing catalyst (B) | | | | |
| (b1) | Neodecanoic acid | 3.3 | 3.3 | 3.3 |
| (b2) | DMAPA | 0.5 | 0.5 | 0.5 |
| (b3) | Al(O*^{s}*Bu)₃ | 1.6 | 1.6 | 1.6 |
| Water absorption rate | After 5-day immersion at 60°C | 1.3% | 1.5% | 1.0% |

| | | | | |
|---|---|---|---|---|
| (14) Manufactured by Evonik (15) Manufactured by Momentive | | | | |

### (Examples 23 and 24)

As shown in Table 10, the base material 3 or 6 prepared as above was used and mixed with a silane coupling agent and a curing catalyst in the proportions indicated in Table 10. The mixtures were measured for the water absorption rate. In the table, "Ti(O*ⁱ*Pr)₄" represents tetraisopropoxytitanium. The results are shown in Table 10.

**[Table 10]**

| Component proportions (parts by weight) | | Ex. | |
|---|---|---|---|
| | | 23 | 24 |
| Base material | | Base material 3 | Base material 6 |
| | | 452 | 452 |
| Silane coupling agent (C) | VTMO | 5 | 5 |
| | AMMO | 3 | 3.3 |
| Curing catalyst (B) | | | |
| (b1) | Neodecanoic acid | 3.3 | 3.3 |
| (b2) | DMAPA | 0.5 | 0.5 |
| (b3) | Ti(O*ⁱ*Pr)₄ | 1.8 | 1.6 |
| Water absorption rate | After 5-day immersion at 60°C | 2.7% | 2.0% |

Base materials each containing a reactive silicon group-containing organic polymer as a resin component were prepared using components in the proportions indicated in Table 11. The polymer (A), a plasticizer, calcium carbonate, balloons, a pigment, a thixotropic agent, an antioxidant, a light stabilizer, and an ultraviolet absorber were weighed into a plastic container in the proportions indicated in Table 11, and the contents of the container were mixed and stirred by means of Awatori Rentaro to disperse the components uniformly. In the table, "Mesamoll" is an alkylsulfonic phenyl ester (manufactured by LANXESS), and "PPG 2000" is polyoxypropylene diol having a molecular weight of 2,000.

**[Table 11]**

| Component proportions of base material (parts by weight) | | Base material 16 | Base material 17 |
|---|---|---|---|
| Organic polymer (A) | A-1 | 100 | 100 |
| Plasticizer | Mesamoll | 120 | |
| | PPG 2000⁽¹⁶⁾ | | 120 |
| Calcium carbonate | Winnofil SPM⁽¹¹⁾ | 160 | 160 |
| | Imerseal 36S⁽¹¹⁾ | 54 | 54 |
| Balloons | MFL-81GCA⁽¹²⁾ | 5 | 5 |
| Pigment | RFK-2⁽¹³⁾ | 5 | 5 |
| Thixotropic agent | Crayvallac SLT | 5 | 5 |
| Antioxidant | Irganox 1010⁽¹⁰⁾ | 1 | 1 |
| Light stabilizer | Tinuvin 770 | 1 | 1 |
| Ultraviolet absorber | Tinuvin 326⁽¹⁰⁾ | 1 | 1 |

### (Examples 25 and 26)

As shown in Table 12, the base material 16 or 17 prepared as above was used and mixed with a silane coupling agent and a curing catalyst in the proportions indicated in Table 12. The mixtures were measured for the water absorption rate. The results are shown in Table 12.

**[Table 12]**

| Component proportions (parts by weight) | | Ex. | |
|---|---|---|---|
| | | 25 | 26 |
| Base material | | Base material 16 | Base material 17 |
| | | 452 | 452 |
| Silane coupling agent (C) | VTMO | 5 | 5 |
| | AMMO | 3 | 3 |
| Curing catalyst (B) | | | |
| (b1) | Neodecanoic acid | 3.3 | 3.3 |
| (b2) | DMAPA | 0.5 | 0.5 |
| (b3) | Al(O*^{s}*Bu)₃ | 1.6 | 1.6 |
| Water absorption rate | After 5-day immersion at 60°C | 2.3% | 2.6% |

Base materials each containing a reactive silicon group-containing organic polymer as a resin component were prepared using components in the proportions indicated in Table 13. The polymer (A), a plasticizer, calcium carbonate, a pigment, a thixotropic agent, an antioxidant, a light stabilizer, and an ultraviolet absorber were weighed into a plastic container in the proportions indicated in Table 13, and the contents of the container were mixed and stirred by means of Awatori Rentaro to disperse the components uniformly.

**[Table 13]**

| Component proportions of base material (parts by weight) | | Base material 18 |
|---|---|---|
| Organic polymer (A) | A-1 | 100 |
| Plasticizer | Hexamoll DINCH⁽¹⁰⁾ | 90 |
| Calcium carbonate | CC-R⁽¹¹⁾ | 160 |
| | Whiton SB⁽¹²⁾ | 54 |
| Pigment | R820⁽¹⁶⁾ | 5 |
| Thixotropic agent | Crayvallac SL⁽¹⁷⁾ | 5 |
| Antioxidant | Irganox 1010⁽¹⁰⁾ | 1 |
| Light stabilizer | Tinuvin 770 | 1 |
| Ultraviolet absorber | Tinuvin 326⁽¹⁰⁾ | 1 |

| | | |
|---|---|---|
| (16) Manufactured by Ishihara Sangyo Kaisha, Ltd. (17) Manufactured by ARKEMA | | |

### (Examples 27, 28, and 29 and Comparative Example 6)

As shown in Table 14, the base material 18 prepared as above was used and mixed with a silane coupling agent and a curing catalyst in the proportions indicated in Table 14. The mixtures were measured for the water absorption rate. In the table, "DEAPA" is 3-diethylaminopropylamine, and "Zr(OPr)₄/PrOH" is a 1-propanol solution of tetrapropoxyzirconium at a concentration of about 70 mass%. The results are shown in Table 14.

**[Table 14]**

| Component proportions (parts by weight) | | Ex. | | | Comp. |
|---|---|---|---|---|---|
| | | 27 | 28 | 29 | 6 |
| Base material | | Base material 18 | | | |
| | | 452 | 452 | 452 | 452 |
| Silane coupling agent (C) | VTMO | 5 | 5 | 2 | 5 |
| | AMMO | 3 | 3 | 3 | 3 |
| Curing catalyst (B) | | | | | |
| (b1) | Neodecanoic acid | 3.3 | 3.3 | 3.3 | 3.3 |
| (b2) | DEAPA⁽¹⁸⁾ | 0.65 | 0.65 | 0.65 | 0.65 |
| (b3) | AL(O*^{s}*Bu)₃ | 1.6 | | | |
| | Ti(O*ⁱ*Pr)₄ | | 1.8 | | |
| | Zr(OPr)₄/PrOH⁽¹⁹⁾ | | | 3.0 | |
| Water absorption rate | After 5-day immersion at 60°C | 2.4% | 3.1% | 1.7% | 7.1% |

| | | | | | |
|---|---|---|---|---|---|
| (18) Manufactured by Tokyo Chemical Industry Co., Ltd. (19) Manufactured by Tokyo Chemical Industry Co., Ltd. | | | | | |

As seen from Table 14, the curable compositions of Examples 27 to 29, which contained the catalyst components (b1), (b2), and (b3), exhibited a lower water absorption rate than the composition of Comparative Example 6 which contained only the catalyst components (b1) and (b2).

### (Example 30 and Comparative Example 7)

A base material containing a reactive silicon group-containing organic polymer as a resin component was prepared using components in the proportions indicated in Table 15. The polymer (A), a plasticizer, calcium carbonate, balloons, a pigment, a thixotropic agent, an antioxidant, a light stabilizer, and an ultraviolet absorber were weighed into a plastic container in the proportions indicated in Table 15, and the contents of the container were mixed and stirred by means of Awatori Rentaro to disperse the components uniformly.

**[Table 15]**

| Component proportions of base material (parts by weight) | | Base material 19 |
|---|---|---|
| Organic polymer (A) | A-16 | 100 |
| Plasticizer | Hexamoll DINCH⁽¹⁰⁾ | 120 |
| Calcium carbonate | Winnofil SPM⁽¹¹⁾ | 160 |
| | Imerseal 36S⁽¹¹⁾ | 54 |
| Balloons | MFL-81GCA⁽¹²⁾ | 5 |
| Pigment | RFK-2⁽¹³⁾ | 5 |
| Thixotropic agent | Crayvallac SLT | 5 |
| Antioxidant | Irganox 1010(10) | 1 |
| Light stabilizer | Tinuvin 770 | 1 |
| Ultraviolet absorber | Tinuvin 326⁽¹⁰⁾ | 1 |

As shown in Table 16, the base material 19 prepared as above was used and mixed with a silane coupling agent and a curing catalyst in the proportions indicated in Table 16. The mixtures were measured for the water absorption rate. The results are shown in Table 16.

**[Table 16]**

| Component proportions (parts by weight) | | Ex. | Comp. I |
|---|---|---|---|
| | | 30 | 7 |
| Base material | | Base material 19 | |
| | | 452 | 452 |
| Silane coupling agent (C) | VTMO | 5 | 5 |
| | AMMO | 3 | 3 |
| Curing catalyst (B) | | | |
| (b1) | Neodecanoic acid | 3.3 | 3.3 |
| (b2) | DMAPA | 0.65 | 0.65 |
| (b3) | Al(O*^{s}*Bu)₃ | 1.6 | |
| Water absorption rate | After 5-day immersion at 60°C | 1.0% | 6.5% |

As seen from Table 16, the curable composition of Example 30, which contained the catalyst components (b1), (b2), and (b3), exhibited a lower water absorption rate than the composition of Comparative Example 7 which contained only the catalyst components (b1) and (b2).

### (Example 31 and Comparative Example 8)

The polymer (A), a silane coupling agent, and a curing catalyst were mixed in the proportions indicated in Table 17. The mixtures were measured for the water absorption rate. The results are shown in Table 17.

**[Table 17]**

| Component proportions (parts by weight) | | Ex. | Comp. |
|---|---|---|---|
| | | 31 | 8 |
| Organic polymer (A) | A-17 | 100 | 100 |
| Silane coupling agent (C) | VTMO | 5 | 5 |
| | AMMO | 3 | 3 |
| Curing catalyst (B) | | | |
| (b1) | Neodecanoic acid | 3.3 | 3.3 |
| (b2) | DMAPA | 0.5 | 0.5 |
| (b3) | Al(O*ⁱ*Pr)₃ | 1.3 | |
| Water absorption rate | After 5-day immersion at 60°C | 7.2% | 16.9% |

As seen from Table 17, the curable composition of Example 31, which contained the catalyst components (b1), (b2), and (b3), exhibited a lower water absorption rate than the composition of Comparative Example 8 which contained only the catalyst components (b1) and (b2).

## Claims

1. A curable composition comprising:
an organic polymer (A) comprising a reactive silicon group represented by the following formula (1):
-SiR¹₃₋ₐXₐ (1), wherein R¹ is a substituted or unsubstituted hydrocarbon group having 1 to 20 carbon atoms or a triorganosiloxy group represented by R⁰₃SiO- wherein the three R⁰ groups are each a hydrocarbon group having 1 to 20 carbon atoms and may be the same or different, X is a hydroxy group or a hydrolyzable group, a is 1, 2, or 3, and when there are a plurality of R¹ or X groups, the R¹ or X groups may be the same or different; and
a curing catalyst (B) comprising the following components (b1), (b2), and (b3):
(b1) an organic carboxylic acid;
(b2) an organic amine compound; and
(b3) a metal compound represented by the following formula (2):
M(OR²)_{d}Y_{e-d} (2), wherein M is a metal atom having a valence e and selected from titanium metal, aluminum metal, zirconium metal, and hafnium metal, e is the valence of the central metal, R² is a substituted or unsubstituted hydrocarbon group having 1 to 20 carbon atoms, Y is a chelate coordination compound, and d is 0 or an integer from 1 to e.

2. The curable composition according to claim 1, wherein the number of the reactive silicon groups in the organic polymer (A) is 0.7 or more on average per polymer chain end.

3. The curable composition according to claim 2, wherein the number of the reactive silicon groups in the organic polymer (A) is 0.8 or more on average per polymer chain end.

4. The curable composition according to any one of claims 1 to 3, wherein the reactive silicon group of the organic polymer (A) is a trimethoxysilyl group.

5. The curable composition according to any one of claims 1 to 4, wherein the organic polymer (A) has a main chain structure comprising a polyoxyalkylene, a saturated hydrocarbon polymer, or a (meth)acrylic ester polymer.

6. The curable composition according to claim 5, wherein the main chain structure of the organic polymer (A) is a polyoxyalkylene.

7. The curable composition according to any one of claims 1 to 6, wherein the organic polymer (A) is a polymer having a main chain having a branched structure.

8. The curable composition according to any one of claims 1 to 7, wherein the curing catalyst (B) comprises a reaction product of part or all of the components (b1), (b2), and (b3).

9. The curable composition according to any one of claims 1 to 7, wherein the curing catalyst (B) is a mixture of the components (bl), (b2), and (b3).

10. The curable composition according to any one of claims 1 to 9, wherein the component (b3) of the curing catalyst (B) is an aluminum compound.

11. The curable composition according to any one of claims 1 to 9, wherein the component (b3) of the curing catalyst (B) is a titanium compound.

12. The curable composition according to claim 11, wherein an amount of the titanium compound is 0.1 parts by weight or less per 100 parts by weight of the organic polymer (A).

13. A cured product obtained by curing the curable composition according to any one of claims 1 to 12.

14. A waterproof material comprising the curable composition according to any one of claims 1 to 12 or the cured product according to claim 13.

15. A method for producing the curable composition according to any one of claims 1 to 12, the method comprising:
adding the components (b1) to (b3) to the organic polymer (A) without reacting the organic carboxylic acid (b1) and the metal compound (b3) beforehand.
